(19) Europäisches Patentamt
European Patent Office
Office européen des brevets

(11) **EP 2 596 001 B1**

(12) **EUROPÄISCHE PATENTSCHRIFT**

(45) Veröffentlichungstag und Bekanntmachung des Hinweises auf die Patenterteilung:
**03.09.2014 Patentblatt 2014/36**

(21) Anmeldenummer: **11739014.6**

(22) Anmeldetag: **11.07.2011**

(51) Int Cl.:
**C07F 7/08** (2006.01)     **C07F 7/18** (2006.01)
**C04B 41/49** (2006.01)

(86) Internationale Anmeldenummer:
**PCT/EP2011/061766**

(87) Internationale Veröffentlichungsnummer:
**WO 2012/022544 (23.02.2012 Gazette 2012/08)**

(54) **WASSERLÖSLICHE ORGANOSILICONATPULVER**

WATER-SOLUBLE ORGANOSILICONATE POWDER

POUDRES DE SILICONATES ORGANIQUES SOLUBLES DANS L'EAU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.07.2010 DE 102010031624**

(43) Veröffentlichungstag der Anmeldung:
**29.05.2013 Patentblatt 2013/22**

(73) Patentinhaber: **Wacker Chemie AG**
**81737 München (DE)**

(72) Erfinder:
• **SCHILDBACH, Daniel**
**84503 Altötting (DE)**
• **AUER, Dominik**
**84503 Altötting (DE)**
• **FELIX, Karl-Heinz**
**84367 Reut (DE)**
• **STEPP, Michael**
**A-5122 Überackern (AT)**

(74) Vertreter: **Fritz, Helmut et al**
**Wacker Chemie AG**
**Zentralbereich Patente, Marken und Lizenzen**
**Hanns-Seidel-Platz 4**
**81737 München (DE)**

(56) Entgegenhaltungen:
**US-A- 4 252 569**

**Beschreibung**

Die Erfindung betrifft wasserlösliche Organosiliconatpulver, ein Verfahren zu ihrer Herstellung sowie ihre Verwendung, insbesondere zur Hydrophobierung von mineralischen Baustoffen.

Alkaliorganosiliconate wie Kaliummethylsiliconat werden schon seit Jahrzehnten zur Hydrophobierung, insbesondere von mineralischen Baustoffen eingesetzt. Sie lassen sich aufgrund ihrer guten Wasserlöslichkeit als wässrige Lösung auf Feststoffen applizieren, wo sie nach Verdampfen des Wassers unter dem Einfluss von Kohlendioxid festhaftende, dauerhaft wasserabweisende Oberflächen bilden. Da sie praktisch keine hydrolytisch abspaltbaren organischen Reste enthalten, erfolgt die Aushärtung vorteilhafterweise ohne Freisetzung unerwünschter flüchtiger, organischer Nebenprodukte.

Die Herstellung von Alkaliorganosiliconaten insbesondere Kalium- bzw. Natriummethylsiliconaten wurde vielfach beschrieben. In den meisten Fällen steht dabei die Herstellung von anwendungsfertigen und lagerstabilen, wässrigen Lösungen im Vordergrund.

Beispielsweise wird in DE 4336600 ein kontinuierliches Verfahren ausgehend von Organotrichlorsilanen über das Zwischenprodukt Organotrialkoxysilan beansprucht. Vorteilhaft ist dabei, dass die gebildeten Nebenprodukte Chlorwasserstoff und Alkohol zurückgewonnen werden und die gebildete Siliconat-Lösung praktisch chlorfrei ist. Als Voraussetzung für die Wassermischbarkeit und die Lagerstabilität der Lösungen wird ein Mol-Verhältnis von Alkalihydroxid zu Alkoxysilan von mindestens 1 beschrieben.

Dies findet auch in anderen Patenten Bestätigung, beispielsweise in US 4252569, wo zur Herstellung von wässrigen Alkalisiliconat-Lösungen ein Molverhältnis Alkalihydroxid zu Chlorsilan (dessen Hydrolyse/Alkoxylierungsprodukt eingesetzt wird) von mindestens 0,9 bis 1 als Voraussetzung für eine vollständige Reaktion und Löslichkeit des gebildeten Alkalisiliconats angegeben ist.

Nachteilig ist an diesen Produkten, dass der - dem Silicon-Anteil entsprechende - Wirkstoffgehalt mit einer Mindestmenge Alkali gekoppelt ist. Die Verringerung des Molverhältnisses von Alkali zu Silicium auf Werte deutlich <1 wäre bei gleicher Wirksamkeit wirtschaftlich und technisch von Vorteil.

Besonders gut geeignet sind wasserlösliche Organosiliconate zur Hydrophobierung, d.h. wasserabweisenden Ausrüstung, von Baustoffen. In der Regel sind dies anorganische Baustoffe, die silicatischer und nicht-silicatischer Natur sein können. Hier hat vor allem die wässrige Lösung des Methylsiliconats eine große Bedeutung. Dabei handelt es sich insbesondere um das Kalium- (Kaliummethylsiliconat) oder das Natriumderivat (Natriummethylsiliconat).

Wässrige Lösungen von Organosiliconaten sind besonders gut zur Hydrophobierung von schwach sauren bis schwach alkalischen Baustoffen geeignet, insbesondere von Produkten aus gebranntem Ton, Naturstein oder Gips. Dabei kann die Applikation des Hydrophobiermittels entweder durch Imprägnierung oder Massehydrophobierung erfolgen. Bei der Imprägnierung werden zum Beispiel Produkte aus gebranntem Ton oder Naturstein für eine gewisse Zeit in eine wässrige Verdünnung des Organosiliconats getaucht oder mit einer solchen Verdünnung besprüht, wobei die Aktivsubstanz gelöst in Wasser kapillar in das Porengefüge des Baustoffs eindringt. Je nach vorherrschenden Bedingungen entwickelt sich nach einer Zeit von wenigen Minuten über mehrere Stunden bis hin zu einigen Tagen nach Trocknung des Baustoffs eine hydrophobe Zone, die den Baustoff umgibt und seine kapillare Wasseraufnahme drastisch senkt. Bei der Massehydrophobierung wird die wässrige Lösung des Organosiliconats ggf. nach weiterer Verdünnung mit dem wässrigen Slurry (Brei) zum Beispiel eines auf Gips basierenden Baustoffs vermischt. Nach dem Aushärten und Trocknen des Baustoffes wird eine stark reduzierte Wasseraufnahme des Gipsbaustoffs verglichen mit dem unhydrophobierten Baustoff gemessen. Der Vorteil der Massehydrophobierung z.B. von Gips ist, dass der Baustoff nicht nur von einer hydrophoben Zone umgeben ist, sondern durch und durch wasserabweisend ist. Dies ist insbesondere wichtig bei tendenziell wasserlöslichen Baustoffen wie Gips oder wenn der Baustoff nach der wasserabweisenden Behandlung in Stücke geschnitten wird. Dieses Verfahren findet z.B. bei der Herstellung von Gipskartonplatten, Gipswandbauplatten oder Gipsfaserplatten Anwendung.

Gipsputze und -spachtelmassen oder gipsbasierte Fliesenkleber werden jedoch als Pulver in Säcken oder Silos auf die Baustelle geliefert und erst dort mit dem Anmachwasser angerührt. Für die Anwendung in Gipsputzen, Gipsspachtelmassen, pulverförmigen Gips-Reparaturspachteln, gipsbasierten Fliesenklebern und ähnlichen mineralischen Baustoffen wird daher ein festes Hydrophobiermittel benötigt, das der anwendungsfertigen Trockenmischung zugefügt werden kann und erst bei Zusatz von Wasser während der Applikation vor Ort, z.B. auf der Baustelle, in kurzer Zeit seine hydrophobierende Wirkung entfaltet. Dies nennt man Dry-Mix-Anwendung.

Bei den meisten herkömmlichen Dry-Mix-Hydrophobiermitteln gemäß dem aktuellen Stand der Technik handelt es sich um geträgerte Systeme, d.h. dass ein eigentlich flüssiges Hydrophobiermittel wie z.B. ein Silan- und/oder Siloxanwirkstoff auf ein chemisch mehr oder weniger inertes Trägermaterial aufgetragen wird. Dabei wird nur soviel Hydrophobiermittel aufgetragen, dass ein trockenes und rieselfähiges Pulver erhalten wird. So ergeben sich Aktivgehalte von nur 30-50 % - daraus folgt dass die Masse des nicht wirksamen Trägermaterials 50-70 % der Gesamtmasse einnimmt. Das Trägermaterial kann anorganischer Natur, z.B. Kieselsäuren, Silicate, oder organischer Natur, z.B. Polyvinylalkohole sein, wie beschrieben in WO 2010052201. Durch das Mischen mit dem Anmachwasser und intensives Vermischen entfaltet das flüssige Hydrophobiermittel seine Wirkung, während das Trägermaterial als funktionsloses Füllmaterial im ausgehärteten Baustoff verbleibt. Das Trägermaterial kann sogar negative Auswirkungen auf den fertig ausgehärteten Baustoff haben - so ist bekannt, dass Polyvinylalkohole die Hydrophilie von Gipsbaustoffen tendenziell erhöhen, was kontraproduktiv ist.

Herkömmliche Dry-Mix-Hydrophobiermittel haben eine Reihe von Nachteilen. Bei diesen bekannten Produkten tritt das Problem auf, dass durch die hohe Hydrophobie der Pulver und vorzeitige Migration des Hydrophobiermittels auf den noch mit Wasser zu mischenden Baustoff eine verzögerte Anmischbarkeit auftritt. Dadurch kommt es zusätzlich zum Zeitverlust zur Ausbildung von unerwünschtem Staub aus dem Baustoff durch die verzögerte Benetzung mit Wasser. Ebenfalls haben herkömmliche Dry-Mix-Hydrophobiermittel einen vergleichsweise niedrigen Aktivgehalt, weil sie meist aus einem flüssigen Siloxanwirkstoff auf einem festen Träger bestehen, wie beschrieben in WO 2010052201, Beispiel 1. Dem Träger kommt ausser der Trägerwirkung keine Bedeutung zu, außerdem würde eine Erhöhung des Aktivgehaltes zu klebrigen und nicht mehr rieselfähigen Dry-Mix-Hydrophobiermitteln führen. In der Folge sind diese Hydrophobiermittel nicht effizient genug.

US 2567110 beschreibt den Zugang zu neutralen (Poly)siloxanen ausgehend von Alkalisil(ox)anolaten und Chlorsilanen. In Beispiel 1 ist die Herstellung von Natriummethylsiliconat durch Umsetzung eines Monomethylsiloxan-Hydrolysats mit einem molaren Äquivalent Natronlauge in Gegenwart von Ethanol beschrieben. Der Feststoff wird durch Abdestillieren des Lösungsmittels isoliert und anschließend bei 170°C bis zur Gewichtskonstanz getrocknet. Im technischen Maßstab ist ein solches Verfahren zur Feststoffisolierung nicht umsetzbar, da sich beim Eindampfen festhaftende Krusten an den Wänden des Reaktionsgefäßes bilden.

Ein weiterer Nachteil des Eindampfens bei der Isolierung des Feststoffs ist die Tatsache, dass sich Alkalisiliconate thermisch zersetzen, was ein Reaktionssicherheitsproblem darstellt. Beispielsweise zerfällt Kaliummethylsiliconat (K : Si = 1 : 1) oberhalb 120°C in einer stark exothermen Reaktion von 643 J/g unter Verlust der Methylgruppe. Unter adiabatischen Verhältnissen steigt dabei die Temperatur auf über 300°C an (s. Vergleichsbeispiel 1).

Außerdem wird ausgehend von wässrigen Lösungen der Alkalisiliconate sehr viel Energie für das Verdampfen des Lösungsmittels Wasser benötigt, was die Wirtschaftlichkeit des Prozesses beeinträchtigt.

Siliconat-Pulver sind in US 2438055, US 2803561 und DE 1176137 beschrieben. Die dort beschriebenen Siliconat-Pulver sind grundsätzlich als Dry-Mix-Hydrophobiermittel geeignet. Jedoch ist die hydrophobierende Wirkung zu gering und die Herstellungsverfahren sind insbesondere für großtechnische Produktion nicht geeignet.

In US 2438055 ist die Herstellung von Siliconaten als Hydrate in fester Form beschrieben. Darin wird das Hydrolysat eines Monoorganotrialkoxysilans oder eines Monoorganotrichlorsilans mit 1 - 3 Mol-Äquivalenten Alkalihydroxid in Gegenwart von Alkohol umgesetzt. Die als Hydrate anfallenden Siliconate werden durch Abdampfen des Alkohols oder durch Zusatz entsprechender unpolarer Lösungsmittel auskristallisiert.

In Beispiel 1 ist die Herstellung von festen Natriummethylsiliconat-Hydraten beschrieben: dazu wird 1 Mol-Äquivalent Methyltriethoxysilan mit 1 Mol-Äquivalent Natriumhydroxid in Form gesättigter Natronlauge (d.h. 50 Gew.-%) zur Reaktion gebracht. Zur Kristallisation des Siliconats wird der Lösung Methanol zugesetzt. Offenbar fällt dabei nur ein Teil des Siliconats aus. Durch Eindampfen der Mutterlauge wird nämlich ein weiterer Feststoff isoliert, der bei Trocknung über $P_2O_5$ bei 140°C 21% Gewichtsverlust zeigt. Über die Mengenverhältnisse wird keine Aussage getroffen.

In US 2803561 wird Alkyltrichlorsilan hydrolysiert zur entsprechenden Alkylkieselsäure, diese wird anschließend mit Alkalihydroxid umgesetzt zu einer wässrigen Lösung von AlkaliSiliconat, welche durch Zusatz von bis 10% Alkohol oder Keton stabilisiert wird. Wie die Trocknung des Siliconats erfolgt, ist nicht beschrieben. Die Anwendung des getrockneten Siliconats zur Hydrophobierung von Gips ist genannt.

DE 1176137 beschreibt die Herstellung von Alkalimethylsiliconat durch Umsetzung von Methyltrichlorsilan mit wässriger NaOH. Das Alkalimethylsiliconat wird mit Methyltrichlorsilan angesäuert, die entstandene Methylkieselsäure ausgefällt, NaCl-frei gewaschen, getrocknet und wieder mit NaOH zu einer 30%igen Na-Alkalimethylsiliconatlösung umgesetzt, die bei 400°C in 2 Minuten getrocknet wird zum Siliconat-Pulver.

Gegenstand der Erfindung sind Pulver (P) aus Salzen von Organosilanolen, von deren Hydrolyse/Kondensationsprodukten, oder von Organosilanolen zusammen mit deren Hydrolyse/Kondensationsprodukten und Kationen, die ausgewählt werden aus Alkali-, Ammonium- und Organoammoniumionen, bei denen das Molverhältnis von Kation zu Silicium 0,1 bis 0,89 beträgt.

Die Pulver (P) sind rieselfähig, lagerfähig und bilden mit Wasser stabile wässrige Lösungen. Die Pulver (P) können in einem technisch einfach umsetzbaren und sicheren Prozess hergestellt werden.

Gegenstand der Erfindung ist auch ein Verfahren zur Herstellung von Pulvern (P1), bei dem
in einem ersten Schritt Organosilane der allgemeinen Formel 1

$$(R^1)_a Si(Y)_b (-Si(R^2)_{3-c}(Y)_c)_d \qquad (1)$$

oder deren Hydrolyse/Kondensationsprodukte, oder die Organosilane der allgemeinen Formel 1 zusammen mit deren Hydrolyse/Kondensationsprodukten,

wobei

**R¹, R²** einen einwertigen Si-C gebundenen unsubstituierten oder durch Halogenatome, Aminogruppen, $C_{1-6}$-Alkyl oder $C_{1-6}$-Alkoxygruppen substituierten Silylgruppen substituierten Kohlenwasserstoffrest mit 1 bis 30 Kohlenstoffatomen, in dem eine oder mehrere, einander nicht benachbarte -$CH_2$-Einheiten durch Gruppen -O-, -S-, oder -$NR^3$- ersetzt sein können und in denen eine oder mehrere, einander nicht benachbarte =CH-Einheiten durch Gruppen -N= ersetzt sein können,

**R³** Wasserstoff, einen einwertigen unsubstituierten oder durch Halogenatome oder $NH_2$-Gruppen substituierten Kohlenwasserstoffrest mit 1 bis 8 Kohlenstoffatomen,

**Y** Wasserstoff, F, Cl, Br oder O**R⁴**

**R⁴** einen einwertigen unsubstituierten oder durch Halogenatome oder Silylgruppen substituierten Kohlenwasserstoffrest mit 1 bis 10 Kohlenstoffatomen, in dem eine oder mehrere, einander nicht benachbarte $CH_2$-Einheiten durch Gruppen -O-, -S-, oder -$NR^3$- ersetzt sein können und in denen eine oder mehrere, einander nicht benachbarte =CH-Einheiten durch Gruppen -N= ersetzt sein können,

**a** die Werte 1, 2 oder 3 und

**b, c, d** die Werte 0, 1, 2 oder 3 bedeuten,

mit der Massgabe, dass b+c $\geq$ 1 und a+b+d = 4,
in Gegenwart von Wasser und basischem Salz von Kationen, die ausgewählt werden aus Alkali-, Ammonium- und Organoammoniumionen, hydrolysiert werden,
wobei die Menge an basischem Salz so bemessen ist, dass auf ein Mol Silicium mindestens 0,1 Mol und höchstens 3 Mol Kationen kommen, und falls die Organosilane der allgemeinen Formel 1 Reste ausgewählt aus F, Cl, Br aufweisen, pro Mol F, Cl und Br ein weiteres Mol an basischem Salz vorhanden ist,
und mindestens 50% der Reste $R^1$ und $R^2$ höchstens 3 C-Atome enthalten,
in einem zweiten Schritt die freigesetzte Verbindung HY, während oder nach der Hydrolysereaktion aus dem Reaktionsgemisch als Dampf bzw. Gas entfernt wird, wobei eine unter den Reaktionsbedingungen inerte Flüssigkeit F anwesend ist, deren Siedepunkt oberhalb dem der freigesetzten Verbindung HY liegt und in der das als Feststoff anfallende Siliconatsalz bei 100°C/ 1 bar zu höchstens 1 Gew.-% löslich ist,
in einem dritten Schritt durch Ausdestillieren von Wasser eine Suspension des Siliconatsalzes in der Flüssigkeit F gebildet wird und
in einem vierten Schritt das Siliconatsalz als Pulver (P1) durch Filtration, Zentrifugation, Sedimentation oder Abdampfen von der inerten **Flüssigkeit F** isoliert wird.

Gegenstand der Erfindung sind auch die nach diesem Verfahren herstellbaren Pulver (P1). Vorzugsweise werden auch die Pulver (P) nach diesem Verfahren hergestellt.

Die Pulver (P) weisen bei 20°C eine Wasserlöslichkeit von vorzugsweise mindestens 20 Gew.-%, besonders bevorzugt mindestens 30 Gew.-%, insbesondere mindestens 40 Gew.-% auf.

Im Pulver (P) beträgt das bevorzugte Molverhältnis Kation zu Silicium mindestens 0,2, vorzugsweise mindestens 0,4, besonders bevorzugt mindestens 0,5, und höchstens 0,85, besonders bevorzugt höchstens 0,75, insbesondere höchstens 0,7. Vorzugsweise wird das Kation ausgewählt aus Natrium und Kalium. Vorzugsweise ist das Pulver (P) ein Methylsiliconat.

Die Pulver (P) und (P1) weisen mittlere Korngrößen von vorzugsweise höchstens 500 $\mu$m, besonders bevorzugt höchstens 300 $\mu$m, insbesondere höchstens 200 $\mu$m auf.

Das im dritten Schritt ausdestillierte Wasser stammt aus dem im ersten Schritt zugesetzten Wasser und durch Kondensationsprozesse entstandenem Wasser. Im dritten Schritt kann die inerte **Flüssigkeit F** als azeotroper Schlepper für das Ausdestillieren von Wasser dienen.

Die einzelnen Schritte müssen bei dem erfindungsgemäßen Verfahren nicht zeitlich streng getrennt hintereinander ablaufen, sondern werden je nach Art der Einsatzstoffe so gestaltet, dass sie im Sinne einer möglichst maximalen Raum/Zeit-Ausbeute weitgehend parallel verlaufen oder zumindest nahtlos ineinander übergehen.

Anstelle der monomeren Verbindungen der allgemeinen Formel 1 können nicht nur Gemische an Silanen der allgemeinen Formel 1 sondern auch deren Hydrolyse/Kondensationsprodukte, die z.B. durch Teilhydrolyse der monomeren Silane oder durch Alkoholyse der entsprechenden Chlorsilanvorstufen mit feuchtem Alkohol gebildet werden, gegebenenfalls im Gemisch mit den jeweiligen Monomeren, eingesetzt werden.

Bei den Silanen der allgemeinen Formel 1 list für eine rasche und vollständige Umsetzung ein gewisser Anteil an nicht hydrolysierten und/oder kondensierten Monomeren bevorzugt, weshalb in der Gesamtmischung vorzugsweise mindestens 60%, besonders bevorzugt mindestens 80%, insbesondere mindestens 90% aller siliciumhaltigen Bestandteile monomer vorliegen. Tolerierbare Oligomerenanteile ergeben sich z.B. dann, wenn der im zweiten Schritt des erfindungsgemäßen Verfahrens abdestillierte Alkohol $HOR^4$ bereits gewisse Anteile Wasser enthält und zur Herstellung der Alkoxysilane wieder eingesetzt wird. Durch die Schaffung eines geschlossenen Stoffkreislaufs wird die Wirtschaftlichkeit des Gesamtprozesses deutlich erhöht.

Es können auch gemischte Oligomere aus Verbindungen der allgemeinen Formel 1 eingesetzt werden, oder Gemische dieser gemischten oligomeren Siloxane mit monomeren Silanen der allgemeinen Formel 1. Gegebenenfalls vorhandene, durch Hydrolyse gebildete Silanolgruppen in den Verbindungen der allgemeinen Formel 1 oder deren Oligomeren stören dabei nicht.

Vorzugsweise bedeutet höchstens bei 10 Mol-%, insbesondere bei höchstens 1 Mol-% der Verbindungen der allgemeinen Formel 1 **Y** Wasserstoff.

$R^1$, $R^2$ können linear, verzweigt, zyklisch, aromatisch, gesättigt oder ungesättigt sein. Beispiele für Aminogruppen in $R^1$, $R^2$ sind Reste -$NR^5R^6$, wobei $R^5$ und $R^6$ Wasserstoff, ein Rest $C_1$-$C_8$-Alkyl, Cycloalkyl-, Aryl, Arylalkyl, Alkylaryl sein können, welche substituiert sein können durch -$OR^7$, wobei $R^7$ $C_1$-$C_8$-Alkyl, Aryl, Arylalkyl, Alkylaryl sein kann. Falls $R^9$, $R^6$ Alkylreste sind, können darin einander nicht benachbarte $CH_2$-Einheiten durch Gruppen -O-, -S-, oder -$NR^3$- ersetzt sein. $R^5$ und $R^6$ können auch einen Cyclus darstellen. $R^5$ ist bevorzugt Wasserstoff oder ein Alkylrest mit 1 bis 6 Kohlenstoffatomen.

$R^1$, $R^2$ in der allgemeinen Formel 1 steht bevorzugt für einen einwertigen unsubstituierten oder durch Halogenatome, Amino-, Alkoxy- oder Silylgruppen substituierten Kohlenwasserstoffrest mit 1 bis 18 Kohlenstoffatomen. Besonders bevorzugt sind unsubstituierte Alkylreste, Cycloalkylreste, Alkylarylreste, Arylalkylreste und Phenylreste. Vorzugsweise weisen die Kohlenwasserstoffreste $R^1$, $R^2$ 1 bis 6 Kohlenstoffatome auf, Besonders bevorzugt sind der Methyl-, Ethyl-, Propyl-, 3,3,3-Trifluorpropyl-, Vinyl- und der Phenylrest, ganz besonders der Methylrest.

Weitere Beispiele für Reste $R^1$, $R^2$ sind:

n-Propyl-, 2-Propyl-, 3-Chlorpropyl-, 2-(Trimethylsilyl)ethyl-, 2-(Trimethoxysilyl)-ethyl-, 2-(Triethoxysilyl)-ethyl-, 2-(Dimethoxymethylsilyl)-ethyl-, 2-(Diethoxymethylsilyl)-ethyl-, n-Butyl-, 2-Butyl-, 2-Methylpropyl-, t-Butyl-, n-Pentyl-, Cyclopentyl-, n-Hexyl-, Cyclohexyl-, n-Heptyl-, n-Octyl-, 2-Ethylhexyl-, n-Nonyl-, n-Decyl-, n-Undecyl-, 10-Undecenyl-, n-Dodecyl-, Isotridecyl-, n-Tetradecyl-, n-Hexadecyl-, Vinyl-, Allyl-, Benzyl-, p-Chlorphenyl-, o-(Phenyl)phenyl-, m-(Phenyl)phenyl-, p-(Phenyl)phenyl-, 1-Naphthyl-, 2-Naphthyl-, 2-Phenylethyl-, **1**-Phenylethyl-, 3-Phenylpropyl-, 3-(2-Aminoethyl)aminopropyl-, 3-Aminopropyl-, N-Morpholinomethyl-, N-Pyrrolidinomethyl-, 3-(N-Cyclohexyl)aminopropyl-, 1-N-Imidazolidinopropylrest.

Weitere Beispiele für $R^1$, $R^2$ sind Reste -$(CH_2O)_n$-$R^8$, -$(CH_2CH_2O)_m$-$R^9$, und -$(CH_2CH_2NH)_o$H, wobei **n, m** und o Werte von 1 bis 10, insbesondere 1, 2, 3 bedeuten und $R^8$, $R^9$ die Bedeutungen von $R^5$, $R^6$ aufweisen.

$R^3$ bedeutet vorzugsweise Wasserstoff oder einen unsubstituierten oder durch Halogenatome substituierten Alkylrest mit 1 bis 6 Kohlenstoffatomen. Beispiele für $R^3$ sind vorstehend für $R^1$ aufgeführt.

$R^4$ in der allgemeinen Formel 1 kann ethylenisch ungesättigte Doppelbindungen aufweisen oder gesättigt sein. Bevorzugt ist ein einwertiger, gegebenenfalls durch Alkoxygruppen mit 1 bis 3 Kohlenstoffatomen substituierter Alkylrest mit 1 bis 4 Kohlenstoffatomen, der linear oder verzweigt sein kann. Bevorzugt handelt es sich um lineare Alkylreste, ganz besonders bevorzugt sind der Methyl- und der Ethylrest, insbesondere der Methylrest.

Weitere Beispiele für Reste $R^4$ sind:

n-Propyl-, 2-Propyl-, n-Butyl-, 2-Butyl-, 2-Methylpropyl-, t-Butyl-, 2-(Methoxy)-ethyl-, 2-(Ethoxy)ethylrest, 1-proper-2-ylrest.

Falls **d** = 0, dann wird der Anteil an Verbindungen der allgemeinen Formel 1, bei der **a =** 2 oder 3 bedeutet, gegebenenfalls deren Hydrolyse/Kondensationsprodukte oder deren Anteil in gemischten Hydrolyse/Kondensationsprodukte mit Silanen der allgemeinen Formel 1 bei der **a** = 1 bedeutet, vorzugsweise so bemessen, dass Feststoffe entstehen, von denen sich mindestens 20 g, vorzugsweise mindestens 40 g, besonders bevorzugt mindestens 50 g in 50 g demineralisiertem Wasser bei 20°C klar lösen, und beträgt vorzugsweise 0 bis 20 Mol-%, besonders bevorzugt 0 bis 10 Mol-%, insbesondere 0 Mol-% bezogen auf die Gesamtmenge an Silan der allgemeinen Formel 1 bzw. deren Hydrolyse/Kondensationsprodukte. Vorzugsweise bedeutet **d** den Wert 0. Vorzugsweise bedeutet höchstens bei 20 Mol-%, insbesondere bei höchstens 5 Mol-% der Verbindungen der allgemeinen Formel 1 **d** einen Wert 1, 2 oder 3.

Beispiele für Verbindungen der allgemeinen Formel 1, bei der **a** = 1 bedeutet, sind:

$MeSi(OMe)_3$, $MeSi(OEt)_3$, $MeSi(OMe)_2(OEt)$, $MeSi(OMe)(OEt)_2$, $MeSi(OCH_2CH_2OCH_3)_3$, $H_3C$-$CH_2$-$CH_2$-$Si(OMe)_3$, $(H_3C)_2CH$-$Si(OMe)_3$, $CH_3CH_2CH_2CH_2$-$Si(OMe)_3$, $(H_3C)_2CHCH_2$-$Si(OMe)_3$, $tBu$-$Si(OMe)_3$, $PhSi(OMe)_3$, $PhSi(OEt)_3$, $F_3C$-$CH_2$-$CH_2$-$Si(OMe)_3$, $H_2C$=$CH$-$Si(OMe)_3$, $H_2C$=$CH$-$Si(OEt)_3$, $H_2C$=$CH$-$CH_2$-$Si(OMe)_3$, $Cl$-$CH_2CH_2CH_2$-$Si(OMe)_3$, $cy$-$Hex$-$Si(OEt)_3$, $cy$-$Hex$-$CH_2$-$CH_2$-$Si(OMe)_3$, $H_2C$=$CH$-$(CH_2)_9$-$Si(OMe)_3$, $CH_3CH_2CH_2CH_2CH(CH_2CH_3)$-$CH_2$-$Si(OMe)_3$, $Hexadecyl$-$Si(OMe)_3$. $Cl$-$CH_2$-$Si(OMe)_3$, $H_2N$-$(CH_2)_3$-$Si(OEt)_3$, $cyHex$-$NH$-$(CH_2)_3$-$Si(OMe)_3$, $H_2N$-$(CH_2)_2$-$NH$-$(CH_2)_3$-$Si(OMe)_3$, $O(CH_2CH_2)_2N$-$CH_2$-$Si(OEt)_3$, $PhNH$-$CH_2$-$Si(OMe)_3$, $Hexadecyl$-$SiH_3$, $MeSi(OEt)_2H$, $PhSi(OEt)_2H$, $PhSi(OMe)_2H$, $MeSi(OEt)H_2$,

Propyl-Si(OMe)$_2$H, MeSiH$_3$, MeSi(OEt)(OMe)H, (MeO)$_3$Si-CH$_2$CH$_2$-Si(OMe)$_3$, (EtO)$_3$Si-CH$_2$CH$_2$-Si(OEt)$_3$, Cl$_3$Si-CH$_2$CH$_2$-SiMeCl$_2$, Cl$_3$Si-CH$_2$CH$_2$-SiCl$_3$, Cl$_3$Si-(CH$_2$)$_6$-SiCl$_3$, (MeO)$_3$SiSi(OMe)$_2$Me, MeSi(OEt)$_2$Si(OEt)$_3$, MeSiCl$_2$SiCl$_3$, Cl$_3$SiSiCl$_3$, HSiCl$_2$SiCl$_2$H, HSiCl$_2$SiCl$_3$, MeSiCl$_3$, MeSiCl$_2$H, H$_2$C=CH-SiCl$_3$, PhSiCl$_3$, F$_3$C-CH$_2$-CH$_2$-SiCl$_3$, Cl-CH$_2$CH$_2$CH$_2$-SiCl$_3$, MeSi(OMe)Cl$_2$, MeSi(OEt)ClH, EtSiBr$_3$, MeSiF$_3$, Cl-CH$_2$-SiCl$_3$, Cl$_2$CH-SiCl$_3$. Bevorzugt sind MeSi(OMe)$_3$, MeSi(OEt)$_3$, (H$_3$C)$_2$CHCH$_2$-Si(OMe)$_3$ und PhSi(OMe)$_3$, wobei Methyltrimethoxysilan bzw. dessen Hydrolyse/Kondensationsprodukt bevorzugt ist.

Beispiele für Verbindungen der allgemeinen Formel 1, bei der **a** = 2 bedeutet, sind:

Me$_2$Si(OMe)$_2$, Me$_2$Si(OEt)$_2$, Me$_2$Si(OCH(CH$_3$)$_2$)$_2$, MeSi(OMe)$_2$CH$_2$CH$_2$CH$_3$, Et$_2$Si(OMe)$_2$, Me$_2$Si(OCH$_2$CH$_2$OCH$_3$)$_2$, MeSi(OMe)$_2$Et, (H$_3$C)$_2$CH-Si(OMe)$_2$Me, Ph-Si(OMe)$_2$Me, t-Bu-Si(OMe)$_2$Me, Ph$_2$Si(OMe)$_2$, PhMeSi (OEt)$_2$, MeEtSi(OMe)$_2$, F$_3$C-CH$_2$-CH$_2$-Si(OMe)$_2$Me, H$_2$C=CH-Si(OMe)$_2$Me, H$_2$C=CH-CH$_2$-Si(OMe)$_2$Me, Cl-CH$_2$CH$_2$CH$_2$-Si(OMe)$_2$Me, cy-Hex-Si(OMe)$_2$Me, cy-Hex-CH$_2$-CH$_2$-Si(OMe)$_2$Me, H$_2$C=CH-(CH$_2$)$_9$-Si(OMe)$_2$Me, Cl-CH$_2$-SiMe(OMe)$_2$, H$_2$N-(CH$_2$)$_3$-SiMe(OEt)$_2$, CyHex-NH-(CH$_2$)$_3$-SiMe(OMe)$_2$, H$_2$N-(CH$_2$)$_2$-NH-(CH$_2$)$_3$-SiMe(OMe)$_2$, O(CH$_2$CH$_2$)$_2$N-CH$_2$-SiMe(OMe)$_2$, PhNH-CH$_2$-SiMe(OMe)$_2$, (MeO)$_2$MeSi-CH$_2$CH$_2$-SiMe(OMe)$_2$, (EtO)$_2$MeSi-CH$_2$CH$_2$-SiMe(OEt)$_2$, Cl$_2$MeSi-CH$_2$CH$_2$-SiMeCl$_2$, Cl$_2$MeSi-CH$_2$-SiMeCl$_2$, (MeO)$_2$MeSiSi(OMe)$_2$Me, MeSi(OEt)$_2$SiMe(OEt)$_2$, MeCl$_2$SiSiMeCl$_2$, HClMeSiSiMeClH, Me$_2$SiCl$_2$, Me$_2$SiClH, H$_2$C=CH-SiMeCl$_2$, Ph$_2$SiCl$_2$, MePhSiCl$_2$, F$_3$C-CH$_2$-CH$_2$-SiMeCl$_2$,Cl-CH$_2$CH$_2$CH$_2$-SiMeCl$_2$, Me$_2$Si(OMe)Cl, Me$_2$Si(OEt)H, EtSiMeBr$_2$, Me$_2$SiF$_2$, Cl-CH$_2$-SiMeCl$_2$, Cl$_2$CH-SiMeCl$_2$. Me$_2$Si(OEt)H, Me$_2$SiH$_2$, Et$_2$SiH$_2$, EtMeSiH$_2$, Ph$_2$SiH$_2$, Me$_2$Si(OMe)Si(OMe)$_3$, Me$_2$Si(OMe)Si(OMe)Me$_2$, Hexadecyl-SiMeH$_2$, Me$_2$Si(OMe)SiMe$_3$, Me$_2$Si(OMe)Si-Me(OMe)$_2$. Bevorzugt sind Me$_2$Si(OMe)$_2$, Me$_2$Si(OEt)$_2$, MeSi(OMe)$_2$CH$_2$CH$_2$CH$_3$ und Ph-Si(OMe)$_2$Me, wobei Me$_2$Si(OMe)$_2$ und MeSi(OMe)$_2$CH$_2$CH$_2$CH$_3$ besonders bevorzugt sind.

Me bedeutet Methylrest, Et bedeutet Ethylrest, Ph bedeutet Phenylrest, t-Bu bedeutet 2,2-Dimethylpropylrest, cy-Hex bedeutet Cyclohexylrest, Hexadecyl- bedeutet n-Hexadecylrest.

Maßgeblich ist dabei, dass mindestens 50 %, vorzugsweise mindestens 60%, besonders bevorzugt mindestens 70% und höchstens 100%, vorzugsweise höchstens 90%, besonders bevorzugt höchstens 80% aller Reste **R**$^1$ in den Verbindungen der allgemeinen Formel 1 oder deren Hydrolyse/Kondensationsprodukte Methylreste, Ethylreste oder Propylreste sind.

Die basischen Salze weisen vorzugsweise einen pk$_B$ Wert höchstens 12, besonders bevorzugt höchstens 10, insbesondere höchstens 5 auf. Als basische Salze werden Verbindungen eingesetzt, die in Wasser solvatisierte Hydroxidionen bilden und als Kationen Alkali- oder Ammoniumionen enthalten. Als Alkalisalze werden vorzugsweise die Alkalihydroxide, wie Lithiumhydroxid, Natriumhydroxid, Kaliumhydroxid und Cesiumhydroxid eingesetzt, besonders bevorzugt Natriumhydroxid und Kaliumhydroxid. Weitere Beispiele für Alkalisalze sind Alkalicarbonate, wie Natriumcarbonat und Kaliumcarbonat sowie Alkalihydrogencarbonate wie Natriumhydrogencarbonat, Alkaliformiate wie Kaliumformiat, Alkalisilikate (Wasserglas) wie Natriumorthosilikat, Dinatriummetasilikat, Dinatriumdisilikat, Dinatriumtrisilikat oder Kaliumsilikat. Desweiteren können auch Alkalioxide, Alkaliamide oder Alkalialkoholate eingesetzt werden, vorzugsweise diejenigen, die den selben Alkohol freisetzen wie die eingesetzten Silane der allgemeinen Formel 1.

Als Organoammoniumionen sind die Kationen der monomeren Amine der allgemeinen Formel NR$_4$ bevorzugt, wobei mindestens ein Rest **R** einen organischen Rest darstellt. **R** weist die Bedeutungen und bevorzugten Bedeutungen von **R**$^1$ auf.

Beispiele für Ammoniumionen monomerer Amine der allgemeinen Formel NR$_4$ sind Me$_4$N, Et$_4$N, nPr$_4$N, iPr$_4$N, nBu$_4$N, BenzylNMe$_3$, Dodecyl-NMe$_3$ und der Formeln H$_3$N- [CH$_2$CH$_2$-O-]$_q$-H und C$_{12}$H$_{25}$HN-{ [CH$_2$CH$_2$-O-]$_4$-H}{[CH$_2$CH$_2$-O-]$_4$-H}.

Als Organoammoniumionen sind weiterhin die Kationen oligomerer oder polymerer Amine, die mehr als eine Aminfunktion im Kation aufweisen, bevorzugt, beispielsweise der allgemeinen Formeln H$_3$N-[CH$_2$]$_r$-NH$_3$Cl, wobei **r** Werte von 1 bis 10 bedeuten und H$_3$N-[[CH$_2$]$_s$-NH]$_t$-[CH$_2$]$_s$-NH$_2$, wobei **s** Werte von 1 bis 6 und t Werte von 1 bis 10 000, insbesondere bis 1000, besonders bevorzugt bis 100 bedeuten.

Bei den oligomeren und polymeren Aminen kann ein Teil der Aminfunktionen als Hydrochlorid, Hydrogensulfat oder Phosphat vorliegen.

Als Ammoniumsalze werden vorzugsweise die kommerziell erhältlichen oder leicht herstellbaren quaternären Ammoniumhydroxide, -carbonate oder -alkoholate eingesetzt. Bei wasserlöslichen Aminen werden vorzugsweise wässrige Lösungen eingesetzt, da in wässriger Lösung das Ammoniumhydroxid im Gleichgewicht mit dem freien Amin vorliegt und somit das Salz nicht extra isoliert werden muss.

Es können auch Gemische verschiedener Salze gegebenenfalls unterschiedlicher Alkalimetalle eingesetzt werden, beispielsweise Mischungen aus Natriumhydroxid und Kaliumhydroxid sowie Gemische aus Alkalisalzen und Ammoniumsalzen, beispielweise Mischungen aus Alkalihydroxiden und Ammoniumsalzen, wie z.B. Kaliumhydroxid und Ethanolamin oder Natriumcarbonat und Tetramethylammoniumhydroxid. Typische Nebenbestandteile in technischen Qualitäten der basischen Salze (d.h. bei Reinheiten zwischen 80 und 99 Gew.-%) wie Wasser oder andere Salzanteile, z.B. Natriumanteile in Kaliumsalzen oder Carbonate in Hydroxiden, stören in der Regel nicht und können toleriert werden. Eine weitere bevorzugte Variante ist der Einsatz wässriger Zubereitungen von Alkalisiliconaten gegebenenfalls im Gemisch mit anderen Alkalisalzen vorzugsweise Alkalihydroxiden. Dies ist gegebenenfalls vorteilhaft, wenn die wässrige Siliconatzubereitung (Lösung, Suspension, Emulsion) z.B. als Verkaufsprodukt bereits in großen Mengen hergestellt wird, sodass lediglich ein weiterer Reaktionsschritt benötigt wird, die Pulver (P1) herzustellen.

Die Menge an basischem Salz wird vorzugsweise so gewählt, dass das Molverhältnis Kation zu Silicium mindestens 0,2, vorzugsweise mindestens 0,4, besonders bevorzugt mindestens 0,5, insbesondere bevorzugt mindestens 0,6 und höchstens 0,9, vorzugsweise höchstens 0,85, besonders bevorzugt höchstens 0,75, insbesondere bevorzugt höchstens 0,7 beträgt.

Bei Anwesenheit von Resten ausgewählt aus F, Cl, Br in der allgemeinen Formel 1 wird die vorhandene Menge an F, Cl und Br mit der stöchiometrischen Menge an Base, vorzugsweise mit Alkalihydroxid umgesetzt. Die dabei entstehenden Neutralisationsprodukte können von dem Organosiliconat nicht oder nur mit hohem Aufwand abgetrennt werden und verbleiben deshalb vorzugsweise im erfindungsgemäßen Pulver (P1), sodass sich dessen Wirkstoffgehalt entsprechend verringert. Vorzugsweise bedeutet deshalb höchstens bei 50 Mol-%, insbesondere bei höchstens 20 Mol-%, besonders bevorzugt bei höchstens 5 Mol-% der Verbindungen der allgemeinen Formel 1 Y Fluor-, Chlor und/oder Brom.

Ein Vorteil des erfindungsgemäßen Verfahrens ist die enorme tolerierbare Variationsbreite der Einsatzstoffe und die damit einhergehenden relativ geringen Anforderungen an deren Reinheit. Das Verfahren ist deshalb sehr gut geeignet, auch Neben- und Abfallprodukte aus dem ganzen Silan/Siloxanverbund zu verwerten, beispielsweise Rückstände der Silandirektsynthese, teilalkoxylierte Chlorsilanmischungen, Nebenprodukte von Hydrosilylierungen, katalysatorhaltige Destillationsrückstände, Kondensate aus CVD-Prozessen u.v.m. Es können auch flüssige, feste oder gasförmige Verunreinigen oder Nebenprodukte vorhanden sein, die sofern sie nicht stören, im Produkt verbleiben können, z.B. Kieselsäure oder Metallsalze, wie Eisenchlorid, Eisenoxid, Aluminiumoxid oder platinhaltige Katalysatoren oder durch das Verfahren leicht abzutrennen sind, wie Lösungsmittel.

Die bevorzugt eingesetzte Wassermenge entspricht der für eine vollständige Hydrolyse der Reste Y benötigten Menge, gegebenenfalls vermindert um die vom eingesetzten basischen Salz abspaltbare HY Menge sowie um die Stoffmenge des im Alkalisalz Ammonium- oder Organoammoniumsalz gegebenenfalls gebundenen Wassers oder gegebenenfalls bei Kondensationsprozessen gebildeten Wassers. Obwohl chemisch keine Obergrenze für die Wassermenge existiert, wird man aus wirtschaftlichen Gründen den Wasseranteil möglichst niedrig halten, da überschüssiges Wasser wieder entfernt werden muss. Aufgrund der einfacheren Dosierung von Lösungen des basischen Salzes im Vergleich zu Feststoffen wird die gewünschte Menge an basischem Salz vorzugsweise gelöst in der benötigten Wassermenge eingesetzt. Ein Wasserüberschuss wird demnach z.B. dann sinnvoll und akzeptabel sein, wenn die geringe Löslichkeit des basischen Salzes in Wasser eine größere Wassermenge zur Herstellung einer gesättigten Lösung erfordert, als für die Hydrolyse bei dem erfindungsgemäßen Verfahren benötigt wird oder die Salzlösung in einer entsprechenden Konzentration technisch verfügbar ist. Ein Wasserüberschuss kann auch dazu dienen, die Hydrolysereaktion zu beschleunigen und/oder einen möglichen Restanteil nicht hydrolysierter Reste Y im Pulver P bzw. P1 zu reduzieren.

Eine Möglichkeit, den Wasseranteil zu verringern, ist die Zugabe des basischen Salzes bzw. Gemisches des basischen Salzes entweder pur als Feststoff oder als Lösung in einem organischen Lösungsmittel vorzugsweise in dem gleichen Alkohol, welcher gegebenenfalls bei der Hydrolysereaktion frei wird und die separate Dosierung der erforderlichen Mindestmenge an Wasser. Diese Variante bietet sich beim Einsatz von hydrolysierbaren Alkalialkoholaten, Ammoniumalkoholaten, Ammoniumhydroxiden oder Alkaliamiden als basisches Salz an. Es können aber auch Kombinationen von verschiedenen Lösungsmitteln zum Einsatz kommen wie z.B. Gemische aus Wasser und Alkohol oder Alkohol, Amin und Wasser oder Amin und Wasser.

Die inerte **Flüssigkeit F** greift unter Reaktionsbedingungen nicht in die Reaktion ein. Vorzugsweise liegt der Siedepunkt der inerten **Flüssigkeit F** bei 1013 hPa mindestens 10°C, besonders bevorzugt mindestens 30°C über dem Siedepunkt der im zweiten Schritt freigesetzten Verbindung **HY.**

Als inerte **Flüssigkeit F** eignen sich vorzugsweise Kohlenwasserstoffe, wie Alkane, Cycloalkane, Aromaten oder Alkylaromaten oder deren Gemische, sowie Ether. Bevorzugt werden Alkane und Alkangemische, Cycloalkane und Alkylaromaten eingesetzt, besonders bevorzugt Alkangemische. Vorteilhaft an Alkangemischen sind ihr günstiger Preis sowie ihre gute Verfügbarkeit in verschiedenen, definierten Siedebereichen.

Beispiele für **Flüssigkeiten F:**

n-Hexan, Cyclohexan, n-Heptan, Cycloheptan, n-Octan, Cyclooctan, n-Nonan, n-Decan, n-Dodecan, 2-Methylheptan, Methylcyclopentan, Methylcyclohexan, Isoparaffine wie Isobar® C, E, G, H, L, M von ExxonMobil, Benzol, Toluol, o-Xylol, m-Xylol, p-Xylol, Mesitylen, Ethylbenzol, Methyl-tert-butylether, Diethylether, Diphenylether, Phenylmethylether und Di-n-butylether.

Der Anteil der **Flüssigkeit F** an der Gesamtmischung wird dabei so gewählt, dass eine gute Rührbarkeit der gebildeten Suspension gewährleistet ist. Er beträgt vorzugsweise mindestens 50 Gewichts-% besonders bevorzugt mindestens 100 Gewichts-% und vorzugsweise höchstens 500 Gewichts-%, insbesondere höchstens 300 Gewichts-% der erwarteten Feststoffmenge.

Vorzugsweise wird das Silan der allgemeinen Formel 1 und/oder dessen Hydrolyse/Kondensationsprodukte vorgelegt, basisches Salz und Wasser, vorzugsweise als wässrige Lösung, zudosiert. Sofern **Y** teilweise oder vollständig die Bedeutung F, Cl, Br hat, kann es günstiger sein, basisches Salz und Wasser vorzulegen.

Zum Lösen der Reaktionspartner oder zur Verringerung der Viskosität kann es vorteilhaft sein, ein Lösungsmittel zuzugeben. Vorzugsweise wird dafür der Alkohol $HOR^4$ zugesetzt, der im Reaktionsgemisch bei der Hydrolyse sowieso gegebenenfalls gebildet wird oder die inerte **Flüssigkeit F.** Die Umsetzung erfolgt üblicherweise bei einer Temperatur von 0°C bis 150°C und unter dem Druck der umgebenden Atmosphäre. Das Verfahren kann aber auch bei einem niedrigeren oder höheren Druck durchgeführt werden. Die bei der Hydrolyse freigesetzte Reaktionswärme lässt sich nutzen, um die Reaktionsmischung aufzuheizen. Die Dosierdauer richtet sich deshalb in erster Linie nach der Wärmeleistung durch die Reaktion bzw. der Kühlleistung des Reaktors. Üblicherweise reicht die Wärmeleistung nicht aus, Gemische zum Sieden zu bringen und gegebenenfalls freigesetzten Alkohol komplett abzudestillieren. Man erhitzt deshalb vorzugsweise bereits während der Dosierung oder nach beendeter Dosierung zum Sieden und destilliert den freiwerdenden Alkohol ab. Um eine möglichst hohe Raum/ZeitAusbeute zu erzielen, wird die inerte **Flüssigkeit F** dabei vorzugsweise so zudosiert, dass der Füllgrad des Reaktionsgefäßes konstant bleibt, d.h. nur das abdestillierte Alkoholvolumen durch die **Flüssigkeit F** ersetzt wird. Ist die **Flüssigkeit F** mit dem freiwerdenden Alkohol nicht mischbar und spezifisch leichter als der Alkohol, kann dies beispielsweise mit einem Flüssigkeitsabscheider einfach automatisiert werden, der vor dem Auffangen des Alkoholdestillats mit der inerten **Flüssigkeit F** befüllt wird. Dabei läuft genau so viel inerte **Flüssigkeit** in das Reaktionsgefäß zurück wie Alkohol abdestilliert wird. Wenn die Reaktion beendet ist, kann der Alkohol über das Bodenventil des Abscheiders entnommen und z.B. zur Herstellung der Silane der allgemeinen Formel 1 wiederverwendet werden. Bei dieser Vorgehensweise lässt sich der Fortschritt der Hydrolysereaktion einfach durch Bestimmung der Alkoholmenge im Abscheider z.B. durch Volumen- oder Gewichtsmessung verfolgen und der Endpunkt feststellen. Nach Abdestillieren des Alkohols wird die Mischung vorzugsweise soweit aufgeheizt, dass Reste an Alkohol und Wasser sowie eventuell bei Kondensationsprozessen gebildetes Wasser ausgeschleppt werden, während das Siliconat als Feststoff ausfällt. Besonders bevorzugt wird bis zum Siedepunkt der inerten Flüssigkeit F aufgeheizt. Bei Einsatz eines Flüssigkeitsabscheiders sammelt sich das Wasser als untere Phase im Destillat der Flüssigkeit F, sodass sich der Trocknungsprozess ebenfalls einfach durch Kontrolle der abgeschiedenen Wassermenge verfolgen lässt.

Löst sich der freigesetzte Alkohol in der **inerten Flüssigkeit F,** destilliert man vorzugsweise ohne Flüssigkeitsabscheider bis zum Siedepunkt der höhersiedenden **Flüssigkeit F.** Gegebenenfalls wird fraktionierend über eine Destillationskolonne mit entsprechender Trennleistung destilliert, um Alkohol, **Flüssigkeit F** und gegebenenfalls Wasser destillativ voneinander abzutrennen. Dabei erhält man als Destillate üblicherweise Gemische aus Alkohol, **Flüssigkeit F** und gegebenenfalls Wasser die entweder separat aufgereinigt oder direkt wieder zur Herstellung der Ausgangsverbindungen eingesetzt werden können. Bei dieser Prozessvariante wird vorzugsweise während der Destillation jeweils so viel frische **Flüssigkeit F** nachdosiert, dass die Reaktionsmischung rührbar bleibt.

Sofern in der Reaktionsmischung kein Alkohol vorhanden ist oder kein Alkohol freigesetzt wird, d.h. wenn Y = Wasserstoff, F, Cl und/oder Br, bilden sich als Spaltprodukte Gase, nämlich Wasserstoff, HF, HCl, HBr und/oder schwerflüchtige, im Produkt verbleibende Salze, sodass unmittelbar nach beendeter Reaktion die inerte Flüssigkeit abgetrennt werden kann.

Bei einer weiteren bevorzugten Verfahrensvariante, die sich besonders für eine kontinuerliche Fahrweise eignet, wird zunächst durch Umsetzung der Organosilane der allgemeinen Formel 1 (oder deren Hydrolyse/Kondensationsprodukte, oder der Organosilane der allgemeinen **Formel 1** zusammen mit deren Hydrolyse/Kondensationsprodukten) mit basischem Salz in Gegenwart von Wasser (Hydrolyse) eine Lösung des SiliconatSalzes hergestellt (beispielsweise kontinuierlich nach dem in DE 4336600 beschriebenen Verfahren, vorzugsweise unter Einsatz der mindestens für eine Hydrolyse notwendigen Menge Wasser und ohne vollständiges Abdestillieren des freigesetzten Alkohols). Dies erfolgt bevorzugt in Abwesenheit der inerten **Flüssigkeit F.** Im gleichzeitig durchgeführten zweiten und dritten Schritt wird die dabei gebildete Siliconatsalz-Lösung mit der inerten **Flüssigkeit F** unter Bedingungen in Kontakt gebracht, bei denen die flüchtigen Bestandteile der Lösung verdampfen und das Siliconatsalz als Feststoff ausfällt. Vorzugsweise wird die gebildete Siliconatsalz-Lösung Lösung, die neben dem Siliconatsalz weitere Hydrolyseprodukte wie Alkohol oder Fluorid, Chlorid oder Bromid des basischen Salzes und gegebenenfalls überschüssiges Wasser enthält, mit der **Flüssigkeit F** vermischt. Beim Ausdestillieren der flüchtigen Bestandteile fällt das feste Siliconatsalz als Suspension in der **Flüssigkeit F** an, und kann im vierten Schritt durch Filtration , Zentrifugation, Sedimentation oder Abdampfen der inerten **Flüssigkeit F** isoliert werden. Vorzugsweise wird dabei die **inerte Flüssigkeit F** vorgelegt und die Lösung des Siliconatsalzes unter Bedingungen zudosiert, die ein sofortiges Verdampfen der flüchtigen Bestandteile gewährleisten. Die im jeweiligen Fall optimalen Bedingungen lassen sich vom Fachmann durch Variation der Menge an **Flüssigkeit F,** Temperatur, Druck und/oder Dosiergeschwindigkeit einfach ermitteln. Wird die Lösung des Siliconatsalzes fein zerteilt z.B. über eine Düse mit der inerten **Flüssigkeit F** in Kontakt gebracht, so kann der Verdampfungsvorgang beschleunigt werden. Dabei wird die Siliconat-Lösung vorzugsweise direkt unter Spiegel in die **Flüssigkeit F** eingeleitet. Zur Beschleunigung des Verdampfungsvorgangs kann auch ein Teil der flüchtigen Bestandteile der zudosierten Siliconat-Salzlösung in einem vorgelagerten Schritt abdestilliert oder abgezogen werden, wobei es sich aus wirtschaftlichen Gründen empfiehlt, bei der Hydrolyse nur die für eine vollständige Reaktion notwendige Menge Wasser zuzusetzen. Die unmittelbar beim Eindosieren gebildeten Siliconatsalz-Partikel können als Suspension aus dem Reaktionsgefäß kontinuierlich ausgeschleust und einer gegebenenfalls kontinuierlichen Feststoffisolierung zugeführt werden. Die **Flüssigkeit F** lässt sich dabei fast vollständig zurückgewinnen und wieder in den Prozess einsetzen. Dadurch können Apparategrößen und Mengen an vorzuhaltender **Flüssigkeit F** (Hold Up) trotz entsprechend hoher Durchsatzraten gering gehalten werden. Ein weiterer positiver Effekt dieser Verfahrensvariante ist die kurze Verweilzeit der Siliconat-Lösung unter Destillationsbedingungen (vorzugsweise oberhalb Raumtemperatur), sodass selbst thermisch instabile SiliconatLösungen vollständig und ohne Zersetzungserscheinungen in Suspensionen überführt werden können, die in der Regel eine höhere thermische Stabilität aufweisen. Ein weiterer Vorteil besteht darin, dass über die Temperatur der **Flüssigkeit F** während der Dosierung der Siliconatsalz-Lösung die Korngrößenverteilung der gebildeten Siliconatsalz-Partikel beeinflusst werden kann. Im Regelfall führen niedrigere Temperaturen dabei zu einer größeren mittleren Korngröße.

Es ist ein Vorteil des erfindungsgemäßen Verfahrens, dass sich feste bis pastöse Anhaftungen an den Mischaggregaten und der Reaktorwand bei diesem Prozess mit fortschreitendem Trocknungsgrad ablösen und sich eine feinteilige Suspension ausbildet, aus der das Pulver (P1) durch einfache Feststoffabtrennung wie Filtration, Sedimentation oder Zentrifugieren isoliert werden kann. In einer bevorzugten Variante werden die flüchtigen Bestandteile der feinteiligen Suspension bei dem Druck der umgebenden Atmosphäre oder unter vermindertem Druck abdestilliert und das anfallende Pulver (P1) getrocknet. Dies geschieht vorzugsweise bei Temperaturen unterhalb der individuell (z.B. mit einer DSC-Messung) zu ermittelnden Zersetzungstemperatur der Suspension bzw. des getrockneten Feststoffs also üblicherweise bei Temperaturen unter 120°C, bevorzugt unter 100°C, besonders bevorzugt unter 80°C. Durch diese schonende Trocknung werden Überhitzungen und dadurch ausgelöste unkontrollierbare Zersetzungsreaktionen vermieden. Die bei der Feststoffisolierung abgetrennte **Flüssigkeit F** kann zum Spülen der Anlage verwendet werden, um letzte Feststoffreste auszuschwemmen und die Ausbeute zu erhöhen. Der insbesondere über Filtration, Sedimentation oder Zentrifugieren isolierte Feststoff kann mittels Durchleiten von gegebenenfalls erwärmtem Inertgas, oder in einem Trockenschrank oder beheizten Mischer gegebenenfalls unter vermindertem Druck - vorzugsweise bis zur Gewichtskonstanz - nachgetrocknet werden.

Das Verfahren kann im Batchbetrieb z.B. unter Verwendung eines Rührkessels oder Schaufeltrockners mit Destillationsaufsatz, wie er in Vielzweckanlagen üblich ist, durchgeführt werden. Aufgrund der geringen Belagbildung ist es bei Kampagnen üblicherweise nicht notwendig, den Reaktor zwischen den einzelnen Ansätzen von Feststoffresten zu reinigen. Sollte dennoch eine Reinigung z.B. am Ende der Kampagne erforderlich sein, so ist dies durch einfaches Ausspülen oder gegebenenfalls Fluten der Anlage mit Wasser aufgrund der guten Wasserlöslichkeit kostengünstig und ohne schädliche Emissionen leicht möglich. Ein kontinuierliches Verfahren in einem Rohrreaktor oder einem Misch/Förderaggregat wie einem Kneter oder einem Einschnecken- oder Doppelschneckenextruder oder einem liegenden Schaufeltrockner - vorzugsweise mit mehreren Kammern für die verschiedenen Verfahrensschritte - ist ebenfalls möglich und für die großtechnische Produktion vorteilhaft.

Die Pulver (P) und (P1) sind sehr gut geeignet für die Anwendung als Hydrophobiermittel, insbesondere für mineralische Substrate und Baustoffe, Naturfasern, wie Cellulose und Wolle und synthetische Fasern. Die Hydrophobierung von verarbeiteten Fasern, wie Textilien, Papier und Karton ist ebenfalls sehr gut möglich. Unter den mineralischen Baustoffen sind auf Gips basierende Baustoffe bevorzugt, welche vorzugsweise mindestens 10 Gew-%, insbesondere mindestens 20 Gew-% Gips enthalten.

Unter den Gipsen sind sogenannte reaktive Gipse bevorzugt: Calciumsulfat-Halbhydrat oder -Hemihydrat ($CaSO_4 * 0,5\,H_2O$), in Form von beispielsweise Baugips, Stuckgips, Modellgips oder Isoliergips (engl, stucco oder plaster of paris), und Anhydrite ($CaSO_4$, Anhydrit II und III), wie sie aus bekannten Calcinierverfahren, ausgehend von natürlichem Gipsstein oder künstlichen Gipsen, erhalten werden. Bei den Calcinierverfahren können die Phasen Calciumsulfat-Dihydrat, Calciumsulfat-Halbhydrat und Anhydrit in ihren verschiedenen Formen in unterschiedlichen Verhältnissen anfallen. Auch andere Gipsarten, wie Estrichgips, Marmorgips, Anhydrit und künstliche Gipse (bei der Rauchgasentschwefelung, der Herstellung von Phosphor- und Flusssäure oder von organischen Carbonsäuren anfallend) sind gut geeignet. Je nach Zielanwendung (z.B. Gipskartonplatte, Gipswandbauplatte, Gipsputz, Spachtelmasse, Estrichgips, etc.) und Abbauregion oder Quelle werden Gipse verschiedener Zusammensetzung als Rohstoffe eingesetzt, oft wird jedoch nur von einem Baustoff auf Gipsbasis gesprochen. Der Gips kann Zusätze enthalten, die die Herstellung von Gipsformkörpern oder Gipsprodukten erleichtern oder die Eigenschaften der Gipsformkörper und Gipsprodukte verbessern. Zusätze sind beispielsweise Füllstoffe, wie Siliciumdioxid, Calciumcarbonat und Fasern, Beschleuniger, wie Calciumsulfat-Dihydrat, Kaliumsulfat oder Aluminiumsulfat, Verzögerer, wie Eiweisse oder Weinsäure- oder Citronensäuresalze, Plastifizierungs- und Wasserreduktionsmittel für den Gipsbrei, wie Melamin-, Naphthalin- oder Ligninsulfonate oder Polycarboxylate, Haftvermittler für Karton, wie Stärken, Haftvermittler für Putze und Spachtelmassen, wie redispergierbare Polymerpulver, pH-Wert-verändernde Additive, wie z.B. hydratisierter Kalk oder Zemente.

Die Hydrophobierung von Baustoffpulvern, insbesondere auf Gips basierende Baustoffe ist bevorzugt. Insbesondere werden die Pulver (P) und (P1) als Dry-Mix-Hydrophobiermittel eingesetzt.

Die Pulver (P) und (P1) sind zunächst wasserbenetzbar (hydrophil) und führen zu einer sehr guten und unbeeinträchtigten Anmischbarkeit des Baustoffpulvers. Sie entwickeln dann schnell eine Hydrophobie in der Zeit, die der Baustoff wie z.B. ein Gipsputz, eine Gipsspachtelmasse oder ein gipsbasierter Fliesenkleber zum Abbinden braucht und weisen somit eine ausgezeichnete Balance zwischen Hydrophilie und Hydrophobie auf. Dabei entwickeln sie bei ihrem Wirkmechanismus keine flüchtigen organischen Verbindungen (VOC). Dadurch und durch die Tatsache, dass sie keine bewusst zugesetzten Trägermaterialien enthalten, zählen sie zu den effizientesten verfügbaren Gips-Hydrophobiermitteln sowie Dry-Mix-Hydrophobiermitteln.

Es spielt dabei für die hydrophobierende Wirkung keine Rolle, welchen pH-Wert der betreffende Gips hat. Es können sowohl Gipspulver-Mischungen mit einem neutralen pH-Wert von 7 als auch Gipspulver-Mischungen mit einem sauren pH-Wert zwischen 3-7 als auch Gipspulver-Mischungen mit einem alkalischen pH-Wert zwischen 7-13 eingesetzt werden. Für den Einsatz in Mischungen mit hohen pH-Werten sind Abmischungen von Methylsiliconat mit Siliconaten basierend auf höheren Alkylresten oder Siliconate hergestellt aus Gemischen verschiedener Silane der allgemeinen Formel 1, bei denen zumindest ein Teil der Reste $R^1$ und $R^2$ mehr als ein C-Atom enthält, bevorzugt. Hier ist die Kombination Alkalimetall-Methylsiliconate mit Alkalimetall-Ethyl- und/oder Alkalimetall-Propylsiliconaten oder Alkalimetallsiliconate hergestellt aus Gemischen von Silanen der allgemeinen Formel 1, in der die Reste $R^1$ und $R^2$ einen Methylrest darstellen und Silanen der allgemeinen Formel 1, in der die Reste $R^1$ und $R^2$ Methyl- und Propylreste bedeuten, bevorzugt, wobei bevorzugt mindestens 20 Mol-%, insbesondere mindestens 40 Mol-% der organischen Reste im Pulver (P) bzw. Reste $R^1$ und $R^2$ im Pulver (P1) mindestens 3 Kohlenstoffatome aufweisen.

Die Pulver (P) und (P1) eignen sich nicht nur als Dry-Mix-Hydrophobieradditive, sie eignen sich ebenfalls zur Hydrophobierung von anderen Gipsbaustoffen aus industrieller Fertigung, in denen bislang flüssige Hydrophobiermittel verwendet werden. Dazu zählen ganz besonders Gipsfaserplatten, bei denen dem Gipspulver bzw. Gipsbrei zur mechanischen Verstärkung anorganische oder organische Fasern zugesetzt werden, und Gipsblöcke oder Wandbauplatten, die im Trockenbau ähnlich wie Ziegel mittels Gipsklebemörteln zu massiven Wänden verklebt werden.

Ebenfalls lassen sich Stuckgipspulver wasserabweisend mit Pulvern (P) und (P1) ausrüsten, um Statuen, Figuren, Ornamente, Spezialbauteile, Abformungen und andere gipsbasierte Sonderanfertigen in häuslichen oder anderen Bereichen resistent gegen jeglichen Wassereinfluss zu machen.

Der Einsatz von Alkalimetall-Methylsiliconat-Lösungen war für die Herstellung der Gipskartonplatte bislang nur eingeschränkt möglich. Durch den hohen pH-Wert der Siliconatlösungen kann es bereits während der Herstellung zur Ablösung des Kartons vom Gipskern kommen. Bei den Pulvern (P) und (P1), erhalten nach dem erfindungsgemäßen Herstellungsprozess, konnte der Alkalihydroxidgehalt jedoch deutlich reduziert werden, was einen geringeren pH-Wert des Gipsbreis zur Folge hat. Hieraus ergibt sich ein Vorteil für die Verwendung in pH-Wertsensitiven Anwendungen, in denen Alkalimetall-Methylsiliconatlösungen bislang nicht verwendet werden konnten. Der Zusatz von 2 % Kaliummethylsiliconat in wässriger Lösung (SILRES® BS 16 von Wacker Chemie AG) führt bei einem pHneutralen Alabastergips zu einer pH-Wert-Erhöhung von pH 7 auf pH 12, der Zusatz von 0,8 % Kaliummethylsiliconat-Pulver (Molverhältnis Kalium zu Silicium von 0,64) führt nur zu einer Erhöhung von pH 7 auf pH 11 (gemessen mit Indikatorstäbchen) in beiden Fällen wird eine Wasseraufnahme von unter 5 % erreicht. Die zusätzliche Einschränkung durch den relativ niedrigen Wirkstoffgehalt der Siliconatlösungen z.B. verglichen mit Siliconölen auf Polymethylhydrogensiloxan-Basis, (z.B. SILRES® BS 94 von Wacker Chemie AG), die einen Wirkstoffgehalt von rund 100 % haben, vor allem für die Herstellung der Gipskartonplatte, kann durch den Einsatz der Pulvern (P) und (P1) ebenfalls aufgehoben werden. 40-60 % von handelsüblichen Siliconatlösungen bestehen produktionsbedingt aus Wasser, was bei den Pulvern (P) und (P1) nicht der Fall ist. Sie bestehen vorzugsweise (d.h. im Fall Y ≠ F, Cl, Br) vollständig aus Wirkstoff und enthalten kein Wasser. Dennoch neigen sie im Gegensatz zu den üblichen organischen Hydrophobierpulvern nicht zu Staubexplosionen, was für die sichere Handhabung z.B. bei der Dry-Mix-Herstellung an Luft einen weiteren wesentlichen Vorteil darstellt. Um in noch pH-Wert-sensitiveren Anwendungen sowie bei der Herstellung der Gipskartonplatte den Anstieg des pH-Wertes nach Zugabe des Alkalimetall-Methylsiliconatpulvers noch weiter zu dämpfen, besteht die Möglichkeit, den Pulvern (P) und (P1) saure pH-Wert-reduzierende oder puffernde Zusätze in fester Form zuzusetzen, die erst bei Wasserzugabe in der Anwendung aktiv werden. Dieser Ansatz ist bei flüssigen Alkalimetall-Methylsiliconatlösungen nicht denkbar, da es in wässriger Lösung noch vor der Anwendung spontan zur Neutralisationsreaktion käme und das Alkalimetall-Methylsiliconat destabilisiert und deaktiviert würde. Derartige saure Zusätze können alle in fester Form isolierbaren oder in hydrolysierbaren bzw. wasserlöslichen Hüllsubstanzen wie Polyvinylalkohol, Gelatine oder Polysacchariden (z.B. Cyclodextrinen) verkapselten und in Gegenwart von Wasser sauer reagierenden oder puffernden Stoffe sein, wie z.B. Hydrogensulfate, Schwefelsäureester, Phosphate, Hydrogenphosphate, Dihydrogenphosphate, Phosphorsäure- und Phosphorigsäureester, Eisensalze wie Eisenchlorid, Aluminiumsalze wie Aluminiumsulfat oder Aluminiumnitrat, saure Tonerden, Zeolithe, Kieselgele, Ionenaustauscher, langkettige ein- oder mehrprotonige Carbonsäuren sowie ihre Alkyl- oder Silylester oder ihre Anhydride, Ammoniumsalze oder Phosphoniumsalze, sauer reagierende organische Verbindungen wie Vitamin C (Ascorbinsäure), Phenole, Alginsäure oder Sulfonsäuren und ihre Ester, Amidosulfonsäuren, Taurin, Aminocarbonsäuren wie Glycin, Glutaminsäure oder Cystein, Phosphonsäuren und ihre Ester, Aminophosphonsäuren, Sulfinsäuren und ihre Ester, Polyacryl- und -methacrylsäuren, Lactone oder Sultone.

Die Pulver (P) und (P1) können auch in Kombination mit anderen gängigen Hydrophobieradditiven eingesetzt werden. Beispielsweise verstärken sie den hydrophobierenden Effekt von Siliconölen auf Methylhydrogenpolysiloxan-Basis (z.B. SILRES® BS 94 von Wacker Chemie AG) im Bandstraßengips (Anwendung z.B. Gipskartonplatten).

Die Pulver (P) und (P1) sind ebenfalls geeignet zur Hydrophobierung von Baustoffen aus anderen hydraulisch abbindenden Bindemitteln, wie Zementen (Portland-, Aluminat-, Hütten-, Magnesia-, Phosphatzement), Wasserglas oder Kalk. Damit können die Pulver (P) und (P1) unter anderem Anwendung in Mauer- und Klebemörteln, Grund- und Dekorputzen, Fliesenklebern, Fugenmörteln, Klebe- und Armierungsmörtel für WDVS-Systeme, Pulverfarben, zementären Dichtungsschlämmen, Spachtelmassen, selbstverlaufende Bodenausgleichsmassen und Estriche sowie Flick- und Reparaturmörteln finden.

Für die wasserabweisende Imprägnierung von neutralen bis leicht alkalischen Baustoffen, insbesondere Produkten aus gebranntem Ton oder Naturstein, werden derzeit verdünnte Lösungen von Alkalimetall-Alkylsiliconaten eingesetzt. Dabei wird eine stark verdünnte wässrige Lösung aus einem wasser-enthaltenden Konzentrat (z.B. SILRES® BS 16 von Wacker Chemie AG) hergestellt, und in einem Produktionswerk für die werksseitige Anwendung oder von einem Formulierer für die Fassadenbehandlung, Herstellung von Grundierungen oder die Do-It-Yourself-Anwendung mit Wasser verdünnt. Die Pulver (P) und (P1) bieten hier den Vorteil, dass statt des wasser-enthaltenden Konzentrats ein 100-prozentiges Pulver zum Verarbeiter geliefert werden kann, das dann ebenfalls durch Auflösen in Wasser auf den gewünschten Verdünnungsgrad der Lösung eingestellt werden kann. So können Transport- und Lagerhaltungskosten deutlich gesenkt werden.

Dieser Vorteil ergibt sich ebenfalls für die Anwendung von Alkalimetall-Alkylsiliconaten für die Bohrlochinjektion zur Mauerwerkstrockenlegung, bei der durch die Injektion von Hydrophobiermitteln (z.B. verdünnten Kaliummethylsiliconatlösungen) mit und ohne Druck in bestehendes Mauerwerk horizontale Sperren gegen aufsteigende Feuchte erreicht werden.

Alkalimetall-Alkylsiliconate werden ebenfalls als hydrophobierende Additive in Siliconharzfarben verwendet. Auch hier kommen wässrige Verdünnungen der Alkalimetall-Alkylsiliconate zum Einsatz, die ebenfalls aus hochkonzentrierten Pulvern (P) und (P1) hergestellt werden können. Auch hier können durch den Verzicht auf Wasser im Konzentrat Transport- und Lagerhaltungskosten deutlich gesenkt werden.

Zusätzlich zu den bereits beschriebenen Anwendungen können die Pulver (P) und (P1) z.B. für hydrophobierende Eigenschaften in den folgenden Anwendungen verwendet werden: Hydrophobierung von Harnstoff-Formaldehyd-Harzen, Grundierungen auf der Basis von Styrolacrylaten, Herstellung von Acrylfarben, Flüssigkeiten zur Erzeugung einer Isolierschicht aus kondensiertem Silicat/Siliconat für Halbleiter, Hydrophobierung von Partikeln (z.B. Peroxide, Percarbonate, Farbpigmente), Stabilisierung von Cellulosen gegen Feuchtigkeit, in Kombination mit Phosphaten zur Verbesserung der Feuchte-, Pilz- und Feuerbeständigkeit von damit imprägniertem Holz, Additivierung von Bohrlochspülflüssigkeiten (z.B. nebst Graphit) zur Verringerung von Bohrflüssigkeitsverlust an Bohrlöchern in ausgelaugtem Sand (die hydrophobe Beschichtung von Partikeln verbessert die Abreinigung von Bohrlöchern indem sie Anhaftungen der Spülflüssigkeit an den Partikeln verhindert), Hydrophobierung von feuerbeständigen Schäumen, Platten oder Feuerlöschpulvern, Antigraffiti-Coatings, Additive für injizierbare Mörtel und Zemente, Absorber für Säuren und/oder wässrige biologische oder organische Medien, in Kombination mit Alkalisilikaten zur Bodenverfestigung und -Hydrophobierung wie beispielsweise beschrieben in EP 992 565, Hydrophobieradditiv für Deponieabfälle zur Verhinderung von umweltschädlichen Auswaschungen/Extrakten, säureneutralisierender und gegebenenfalls verstärkender Füllstoff für Elastomere, Additive in Kombination mit SiH-Verbindungen oder Aluminiumpulvern für gips- oder zementbasierte Schäume (z.B. Porenbeton), Instant-Mischung zur hydrophoben/antimikrobiellen Ausstattung von Textilien, Pflanzensamen, Cellulosematerialien, Holz, Steinen in Kombination mit Bioziden, Additiv zur Verstärkung und Hydrophobierung von Asphalt, Katalysatoren auf Basis von Metallasiloxanen durch Umsetzung mit Metallsalzen wie z.B. Aluminium-, Titan-, Zink-, Wolfram-, Lanthan-, Blei-, Cadmium-, Antimon-, Kupfer-, Nickel-, Rhodium-, Silber-, Zirkonium-, Rubidium-, Mangan-, Chrom-, Cobalt-, Vanadium-, Molybdän-, Eisen-, Zinn-, Platin-, Palladiumchloriden, Basen die erst in Kontakt mit Wasser wirksam werden und gleichzeitig neutralisieren und hydrophobieren, Zusatzmittel zu Waschpulvern oder Geschirrspülmitteln, Additiv für Farbpigmente, Zusatz zu Beschichtungen gegen Kesselstein-Ablagerungen, Trockenhydrophobierung von allen möglichen Feststoffen (wie Dünger, Lockmittel, Herbizide, Pestizide, Pigmente, hygroskopische Salze, Glasfasern, Glaskugeln, Natursteine, Sand, Kreide, gelöschter oder gebrannter Kalk, Papier, Fasern s.o, Biozide, Betonpulver, Perlite, Blähton, Blähglas, Metallpulver, Holzmehl, Holzpellets, Hackschnitzel, Keramikpulver, Terracotta-Pulver, Ton, anorganische Füllstoffe), Rieselhilfsmittel, heterogener alkalischer Katalysator zur Steigerung der Reaktivität von Organosiliciumverbindungen z.B. bei Äquilibrierreaktionen, Abbeizzusatz zur Entfernung alter Anstriche, Additiv für Holzfaserplatten (z.B. MDF-Platten).

Bei allen vorgenannten Anwendungen können die Pulver (P) bzw. (P1) auch einer bereits wasserhaltigen Mischung des zu hydrophobierenden Substrats in fester oder ggf. gelöster Form zugesetzt werden. Diese Vorgehensweise bietet sich beispielsweise an, wenn ein Baustoff erst auf der Baustelle mit dem Pulver (P) bzw. (P1) abgemischt werden soll. Das Ausmaß des gewünschten Effekts lässt sich dann einfach über die zugesetzte Menge (P) bzw. (P1) einstellen.

Alle vorstehenden Symbole der vorstehenden Formeln weisen ihre Bedeutungen jeweils unabhängig voneinander auf. In allen Formeln ist das Siliciumatom vierwertig.

In den folgenden Beispielen und Vergleichsbeispielen sind, falls jeweils nicht anders angegeben, alle Mengen- und Prozentangaben auf das Gewicht bezogen und sämtliche Umsetzungen werden bei einem Druck von 0,10 MPa (abs.) durchgeführt.

**Herstellungsbeispiel 1: Siliconat aus Methyltrimethoxysilan / KOH (1:0,85)**

In einem mit Stickstoff inertisierten 500 ml-5-Hals-Rundkolben mit Flügelrührer, Tropftrichter, Thermometer und Wasserabscheider mit Rückflusskühler werden 75 g (0,55 mol) Methyltrimethoxysilan (käuflich erhältlich bei Wacker Chemie AG) und 65 g Isopar E (isoparaffines Kohlenwasserstoffgemisch mit einem Siedebereich von 113 - 143°C, käuflich erhältlich bei ExxonMobil) vorgelegt. Der Wasserabscheider wird mit Isopar E randvoll befüllt. Unter Rühren mit 350 Upm wird eine Lösung von 30,9 g (0,47 mol) Kaliumhydroxid (85%ig, käuflich erhältlich bei AppliChem) in 19,8 g demineralisiertem Wasser binnen 10 Minuten zudosiert. Dabei erwärmt sich die Reaktionsmischung auf 69°C. Durch Nachheizen bringt man auf Siedetemperatur und reduziert die Rührerdrehzahl auf 50 Upm. Das Destillat trennt sich als untere Phase im Wasserabscheider ab. Bis zu einer Siedetemperatur von 121°C sammeln sich 64,9 g klares farbloses Destillat, das nach gaschromatografischer Analyse 83,3 % Methanol, 14,6 % Wasser und 1,7 % Isopar E enthält. Die Hydrolyse der Methoxyreste im Methyltrimethoxysilan ist demnach quantitativ. Während der Destillation scheidet sich ein pastöser weißer Feststoff in der Reaktionsmischung ab, der zunehmend in feine Partikel zerfällt und eine Suspension ausbildet. Man filtriert die Suspension in einer Drucknutsche über eine Beco KD3-Filterplatte und leitet bis zur Gewichtskonstanz Stickstoff hindurch. Es werden 61,1 g feines, weißes, rieselfähiges Pulver erhalten, dessen Feststoffgehalt bei 100% liegt (bestimmt mit der Festgehaltswaage HR73 Halogen Moisture Analyzer von Mettler Toledo bei 160°C). Eine damit hergestellte 50%ige wässrige Lösung weist selbst nach zweiwöchiger Lagerung bei Raumtemperatur unter Luftausschluss keine Niederschläge auf.

Die thermische Stabilität des Feststoffs wird mit Hilfe der Dynamischen Differenz-Kalorimetrie (DSC) untersucht. Für eine Messung werden etwa 5 mg Substanz mit einer konstanten Heizrate von 3K/Min. auf 415°C aufgeheizt und die dabei auftretenden Wärmeströme gemessen. Als Probenbehälter dient ein druckfester F20-Stahltiegel, der sicherstellt, dass keine Verdampfungsverluste möglich sind. Die Substanz zeigt im Bereich ab 229°C eine Zersetzungsenthalpie von 609 J/g.

Laut Partikelgrößenanalyse (Sympatec Helos-Partikelgrößenanalyse) sind 100% aller Partikel kleiner als 150 $\mu$m, das Maximum der Verteilungsdichte liegt bei 47 $\mu$m.

**Nicht erfindungsgemässes Vergleichsbeispiel 1 - Versuch zur Trocknung einer wässrigen Lösung von Kaliummethylsiliconat (Silres® BS16 Wacker Chemie AG) durch Ausheizen des Wassers**

Eine käuflich erhältliche, 54%ige wässrige Lösung von Kaliummethylsiliconat (Silres® BS16, Wacker Chemie AG) wird in einem Dreihalskolben aufgeheizt. Durch Überleiten von ca. 40l/h Stickstoff 2 cm oberhalb der Flüssigkeitsoberfläche wird die Lösung aufkonzentriert. Mit zunehmender Konzentration schäumt das Produkt sehr stark, weißer Feststoff scheidet sich allmählich ausgehend vom Kolbenrand ab. Bei 122°C steigt die Temperatur binnen 10 Minuten auf 277°C an. Das Wasser verdampft dabei vollständig. Es bilden sich am Kolbenrand festhaftende weiße Krusten. Das $^{29}$Si-NMR-Spektrum des Feststoffs zeigt den annähernd quantitativen Verlust der Methylgruppen an.

**Herstellungsbeispiel 2: Siliconat aus Methyltrimethoxysilan / KOH (1:0,64)**

In einem mit Stickstoff inertisierten 500 ml-5-Hals-Rundkolben mit Flügelrührer, Tropftrichter, Thermometer und Wasserabscheider mit Rückflusskühler werden 50 g (0,367 mol) Methyltrimethoxysilan (käuflich erhältlich bei Wacker Chemie AG) und 65 g Isopar E (isoparaffines Kohlenwasserstoffgemisch mit einem Siedebereich von 113 - 143°C, käuflich erhältlich bei ExxonMobil) vorgelegt. Der Wasserabscheider wird mit Isopar E randvoll befüllt. Unter Rühren mit 300 Upm wird eine Lösung von 15,4 g (0,23 mol) Kaliumhydroxid (85%ig, käuflich erhältlich bei AppliChem) in 14,9 g (0,826 mol) demineralisiertem Wasser binnen 12 Minuten zudosiert. Man erhitzt auf Siedetemperatur und reduziert die Rührerdrehzahl auf 50 Upm sobald die Destillation beginnt. Das Destillat trennt sich als untere Phase im Wasserabscheider ab. Bis zu einer Siedetemperatur von 85°C sammeln sich 34,4 g klares farbloses Destillat, das nach gaschromatografischer Analyse 87,8 % Methanol, 4,9 % Wasser und 5,7 % Isopar E enthält. Man lässt die untere Phase aus dem Wasserabscheider ab, füllt mit Isopar E wieder komplett auf und kreist Wasser bis 118°C Siedetemperatur aus. Es fallen dabei 10,8 g Destillat als untere Phase an, das laut GC-Analyse 50,2 % Methanol und 49,7 % Wasser enthält. Die Hydrolyse der Methoxyreste im Methyltrimethoxysilan ist demnach quantitativ. Während der Destillation scheidet sich ein pastöser weißer Feststoff in der Reaktionsmischung ab, der zunehmend in feine Partikel zerfällt und eine Suspension ausbildet. Man filtriert die Suspension in einer Drucknutsche über eine Beco KD3-Filterplatte und leitet bis zur Gewichtskonstanz Stickstoff hindurch. Es werden 38 g feines, weißes, rieselfähiges Pulver erhalten, dessen Feststoffgehalt bei 99,7% liegt (bestimmt mit der Festgehaltswaage HR73 Halogen Moisture Analyzer von Mettler Toledo bei 160°C). Eine damit hergestellte 50%ige wässrige Lösung weist selbst nach zweiwöchiger Lagerung bei Raumtemperatur unter Luftausschluss keine Niederschläge auf.

Im Gaschromatogramm des Filtrats ist lediglich Isopar E nachweisbar.

Die Elementaranalyse des Feststoffs ergibt 29,1% Si, 11,2% C, 3,6% H, 29,9% O, 26,2% K, was einem Molverhältnis von Si:K von 0,65 entspricht (theoretisch: 0,64).

Die thermische Stabilität des Feststoffs wird mit Hilfe der Dynamischen Differenz-Kalorimetrie (DSC) untersucht. Die Substanz zeigt oberhalb 213°C eine Zersetzungsenthalpie von 512 J/g.

Laut Partikelgrößenanalyse (Sympatec Helos-Partikelgrößenanalyse) sind 100% aller Partikel kleiner als 90 $\mu$m, das Maximum der Verteilungsdichte liegt bei 23 $\mu$m.

**Herstellungsbeispiel 3: Siliconat aus Methyltrimethoxysilan / KOH (1:0,60)**

In einem mit Stickstoff inertisierten 500 ml-5-Hals-Rundkolben mit Flügelrührer, Tropftrichter, Thermometer und Wasserabscheider mit Rückflusskühler werden 30 g (0,22 mol) Methyltrimethoxysilan (käuflich erhältlich bei Wacker Chemie AG) und 50 g Isopar E (isoparaffines Kohlenwasserstoffgemisch mit einem Siedebereich von 113 - 143°C, käuflich erhältlich bei ExxonMobil) vorgelegt. Der Wasserabscheider wird mit Isopar E randvoll befüllt. Unter Rühren mit 350 Upm wird eine Lösung von 8,7 g (0,13 mol) Kaliumhydroxid (85%ig, käuflich erhältlich bei AppliChem) in 9,1 g (0,5 mol) demineralisiertem Wasser binnen 12 Minuten zudosiert. Die Mischung erwärmt sich dabei auf 50°C. Man erhitzt auf Siedetemperatur und reduziert die Rührerdrehzahl auf 50 Upm sobald die Destillation beginnt. Das Destillat trennt sich als untere Phase im Wasserabscheider ab. Bis zu einer Siedetemperatur von 119°C sammeln sich 25,4 g klares farbloses Destillat, das nach gaschromatografischer Analyse 80,4 % Methanol, 18,4 % Wasser und 1 % Isopar E enthält. Während der Destillation scheidet sich ein pastöser weißer Feststoff in der Reaktionsmischung ab, der zunehmend in feine Partikel zerfällt und eine Suspension ausbildet. Man filtriert die Suspension in einer Drucknutsche über eine Beco KD3-Filterplatte und leitet bis zur Gewichtskonstanz Stickstoff hindurch. Es werden 19,8 g feines, weißes, rieselfähiges Pulver erhalten, dessen Feststoffgehalt bei 100% liegt (bestimmt mit der Festgehaltswaage HR73 Halogen Moisture Analyzer von Mettler Toledo bei 160°C). Eine damit hergestellte 50%ige wässrige Lösung weist selbst nach zweiwöchiger Lagerung bei Raumtemperatur unter Luftausschluss keine Niederschläge auf.

Die thermische Stabilität des Feststoffs wird mit Hilfe der Dynamischen Differenz-Kalorimetrie (DSC) untersucht. Die Substanz zeigt oberhalb 221°C eine Zersetzungsenthalpie von 468 J/g.

**Herstellungsbeispiel 4:**

200 g einer käuflich erhältlichen, 54%igen wässrigen Lösung von Kaliummethylsiliconat (Silres® BS16, Wacker Chemie AG) werden in einem Dreihalskolben im Gemisch mit 173 g Isopar E auf Siedetemperatur (121°C) erhitzt. Im Wasserabscheider trennen sich 109,1 g Wasser ab. Während der Destillation scheidet sich ein pastöser weißer Feststoff ab, der zunehmend in feine Partikel zerfällt und eine Suspension ausbildet. Man filtriert die Suspension in einer Drucknutsche über eine Beco KD3-Filterplatte und leitet bis zur Gewichtskonstanz Stickstoff hindurch. Es werden 61,1 g feines, weißes, rieselfähiges Pulver erhalten, dessen Feststoffgehalt bei 100% liegt (bestimmt mit der Festgehaltswaage HR73 Halogen Moisture Analyzer von Mettler Toledo bei 160°C). Eine damit hergestellte 50%ige wässrige Lösung weist selbst nach zweiwöchiger Lagerung bei Raumtemperatur unter Luftausschluss keine Niederschläge auf.

Die Elementaranalyse des Feststoffs ergibt 22,6% Si, 9,5% C, 3,3% H, 32,7% O, 29,55% K, was einem Molverhältnis von Si:K von 1,01 entspricht.

Die thermische Stabilität des Feststoffs wird mit Hilfe der Dynamischen Differenz-Kalorimetrie (DSC) untersucht. Die Substanz zeigt oberhalb 222°C eine Zersetzungsenthalpie von 634 J/g.

**Herstellungsbeispiel 5: Siliconat aus Methyltrimethoxysilan / Propyldimethyldiethoxysilan / KOH (0,9:0,1:0,85)**

In einem mit Stickstoff inertisierten 500 ml-5-Hals-Rundkolben mit Flügelrührer, Tropftrichter, Thermometer und Wasserabscheider mit Rückflusskühler werden 27 g (0,198 mol) Methyltrimethoxysilan (käuflich erhältlich bei Wacker Chemie AG), 3,9 g (0,02) n-Propyl(methyl)diethoxysilan (im Labor hergestellt durch Umsetzung von n-Propyl(methyl)dichlorsilan mit Ethanol) und 20 g Isopar E (isoparaffines Kohlenwasserstoffgemisch mit einem Siedebereich von 113-143°C, käuflich erhältlich bei ExxonMobil) vorgelegt. Der Wasserabscheider wird mit Isopar E randvoll befüllt. Unter Rühren mit 350 Upm wird eine Lösung von 12,4 g (0,188 mol) Kaliumhydroxid (85%ig, käuflich erhältlich bei AppliChem) in 7,9 g (0,44 mol) demineralisiertem Wasser binnen 12 Minuten zudosiert. Die Mischung erwärmt sich dabei auf 48°C. Man erhitzt auf Siedetemperatur. Das Destillat trennt sich als untere Phase im Wasserabscheider ab. Bis zu einer Siedetemperatur von 95°C sammeln sich 19,4 g farbloses, leicht trübes Destillat, das nach gaschromatografischer Analyse 78,5 % Methanol, 7,5% Ethanol, 3,5 % Wasser und 8,2 % Isopar E enthält. Man lässt die untere Phase aus dem Wasserabscheider ab, füllt mit Isopar E wieder komplett auf und kreist Wasser bis 131°C Siedetemperatur aus. Es fallen dabei 6,2 g Destillat als untere Phase an, das laut GC-Analyse 46,9 % Methanol, 4,7% Ethanol und 48,4 % Wasser enthält. Während der Destillation scheidet sich ein pastöser weißer Feststoff in der Reaktionsmischung ab, der zunehmend in feine Partikel zerfällt und eine Suspension ausbildet. Man gibt 10 g Cyclohexan zu und filtriert die Suspension in einer Drucknutsche über eine Beco KD3-Filterplatte und leitet bis zur Gewichtskonstanz Stickstoff hindurch. Es werden 21,4 g feines, weißes, rieselfähiges Pulver erhalten, dessen Feststoffgehalt bei 99,5 % liegt (bestimmt mit der Festgehaltswaage HR73 Halogen Moisture Analyzer von Mettler Toledo bei 160°C). Eine damit hergestellte 50%ige wässrige Lösung weist selbst nach zweiwöchiger Lagerung bei Raumtemperatur unter Luftausschluss keine Niederschläge auf.

**Herstellungsbeispiel 6: Siliconat aus Methyltrimethoxysilan / Propyltriethoxysilan / KOH (0,75:0,25:0,85)**

In einem mit Stickstoff inertisierten 500 ml-5-Hals-Rundkolben mit Flügelrührer, Tropftrichter, Thermometer und Wasserabscheider mit Rückflusskühler werden 33,7 g (0,247 mol) Methyltrimethoxysilan (käuflich erhältlich bei Wacker Chemie AG), 17 g (0,082) n-Propyltriethoxysilan (im Labor hergestellt durch Umsetzung von n-Propyltrichlorsilan mit Ethanol) und 67,4 g Isopar E (isoparaffines Kohlenwasserstoffgemisch mit einem Siedebereich von 113 - 143°C, käuflich erhältlich bei ExxonMobil) vorgelegt. Der Wasserabscheider wird mit Isopar E randvoll befüllt. Unter Rühren mit 250 Upm wird eine Lösung von 18,5 g (0,28 mol) Kaliumhydroxid (85%ig, käuflich erhältlich bei AppliChem) in 11,9 g (0,66 mol) demineralisiertem Wasser binnen 12 Minuten zudosiert. Die Mischung erwärmt sich dabei auf 51°C. Man erhitzt auf Siedetemperatur (60°C). Das Destillat trennt sich als untere Phase im Wasserabscheider ab. Bis zu einer Siedetemperatur von 95°C sammeln sich 36,1 g farbloses, leicht trübes Destillat, das nach gaschromatografischer Analyse 56,7 % Methanol, 25,3 % Ethanol, 3,6 % Wasser und 11,5 % Isopar E enthält. Man lässt die untere Phase aus dem Wasserabscheider ab, füllt mit Isopar E wieder komplett auf und kreist Wasser bis 118°C Siedetemperatur aus. Es fallen dabei 8,2 g Destillat als untere Phase an, das laut GC-Analyse 43,8 % Methanol, 17,2 % Ethanol und 38,7 % Wasser enthält. Während der Destillation scheidet sich ein pastöser weißer Feststoff in der Reaktionsmischung ab, der zunehmend in feine Partikel zerfällt und eine Suspension ausbildet. Man filtriert die Suspension in einer Drucknutsche über eine Beco KD3-Filterplatte und leitet bis zur Gewichtskonstanz Stickstoff hindurch. Es werden 33,2 g feines, weißes, rieselfähiges Pulver erhalten, dessen Feststoffgehalt bei 99,5 % liegt (bestimmt mit der Festgehaltswaage HR73 Halogen Moisture Analyzer von Mettler Toledo bei 160°C). Eine damit hergestellte 50%ige wässrige Lösung weist selbst nach zweiwöchiger Lagerung bei Raumtemperatur unter Luftausschluss keine Niederschläge auf.

**Herstellungsbeispiel 7: Siliconat aus Methyltrimethoxysilan / NaOH/ KOH (1,0:0,26:0,39)**

In einem mit Stickstoff inertisierten 1000 ml-4-Hals-Glas-Laborreaktor mit Doppelmantel, Flügelrührer, Tropftrichter, Thermometer und Wasserabscheider mit Rückflusskühler werden 50 g (0,36 mol) Methyltrimethoxysilan (käuflich erhältlich bei Wacker Chemie AG) und 66,5 g Isopar E (isoparaffines Kohlenwasserstoffgemisch mit einem Siedebereich von 113-143°C, käuflich erhältlich bei ExxonMobil) vorgelegt und auf 40°C mittels Wärmeträgeröl über den Doppelmantel aufgeheizt. Der Wasserabscheider wird mit Isopar E randvoll befüllt. Unter Rühren mit 200 Upm wird eine Lösung von 9,3 (0,14 mol) Kaliumhydroxid (85%ig, käuflich erhältlich bei AppliChem) und 3,7 g (0,094 mol) Natriumhydroxid (98%ig, käuflich erhältlich bei Aldrich) in 14,8 g (0,82 mol) demineralisiertem Wasser binnen 12 Minuten zudosiert. Die Mischung erwärmt sich dabei auf 61°C. Man erhitzt auf Siedetemperatur (68°C). Das Destillat trennt sich als untere Phase im Wasserabscheider ab. Bis zu einer Siedetemperatur von 118°C sammeln sich 41,6 g farbloses, leicht trübes Destillat, das nach gaschromatografischer Analyse 81,5 % Methanol (=98% d.Th.), 16,9 % Wasser und 1,2 % Isopar E enthält. Während der Destillation scheidet sich ein pastöser weißer Feststoff in der Reaktionsmischung ab, der zunehmend in feine Partikel zerfällt und eine Suspension ausbildet. Man filtriert die Suspension in einer Drucknutsche über eine Beco KD3-Filterplatte und leitet bis zur Gewichtskonstanz Stickstoff hindurch. Es werden 30 g feines, weißes, rieselfähiges Pulver erhalten, dessen Feststoffgehalt bei 99,8 % liegt (bestimmt mit der Festgehaltswaage HR73 Halogen Moisture Analyzer von Mettler Toledo bei 160°C). Eine damit hergestellte 50%ige wässrige Lösung weist selbst nach zweiwöchiger Lagerung bei Raumtemperatur unter Luftausschluss keine Niederschläge auf.

**Herstellungsbeispiel 8: Siliconat aus Methyltrimethoxysilan KOH (1,0:0,65) (Trocknung durch Eindampfen)**

In einem mit Stickstoff inertisierten 500 ml-5-Hals-GlasKolben, Flügelrührer, Tropftrichter, Thermometer und Wasserabscheider mit Rückflusskühler werden 50 g (0,36 mol) Methyltrimethoxysilan (käuflich erhältlich bei Wacker Chemie AG) und 31,8 g Isopar E (isoparaffines Kohlenwasserstoffgemisch mit einem Siedebereich von 113 - 143°C, käuflich erhältlich bei ExxonMobil) vorgelegt. Unter Rühren mit 300 Upm wird eine Lösung von 31,8g 50%iger wässriger Kalilauge (0,23 mol Kaliumhydroxid) und 2,1 g (0,117 mol) demineralisiertem Wasser binnen 10 Minuten zudosiert. Die Mischung erwärmt sich dabei auf 58°C. Man erhitzt eine Stunde am Rückfluss (66°C) und schaltet anschließende das Destillat auf den randvoll mit Isopar E gefüllten Wasserabscheider. Bis zu einer Siedetemperatur von 118°C sammeln sich 49 g farbloses, leicht trübes Destillat, das nach gaschromatografischer Analyse 84 Flächen-% Methanol, 14 Flächen-% Wasser und 2 Flächen-% Isopar E enthält. Während der Destillation scheidet sich ein pastöser weißer Feststoff in der Reaktionsmischung ab, der zunehmend in feine Partikel zerfällt und eine Suspension ausbildet. Man destilliert unter Rühren bei 70°C Ölbadtemperatur und 5 hPa alle flüchtigen Bestandteile ab. Es werden 37,3 g feines, weißes, rieselfähiges Pulver erhalten, dessen Feststoffgehalt bei 99,5 % liegt (bestimmt mit der Festgehaltswaage HR73 Halogen Moisture Analyzer von Mettler Toledo bei 160°C). Eine damit hergestellte 50%ige wässrige Lösung weist selbst nach zweiwöchiger Lagerung bei Raumtemperatur unter Luftausschluss keine Niederschläge auf. An einem analog hergestellten Pulver sollte die Mindestzündenergie bestimmt werden: bis zur maximal einstellbaren Zündenergie von 10J trat an dem aufgewirbelten Staub keine Zündung auf.

**Herstellungsbeispiel 9: Siliconat aus Methyltrimethoxysilan / Trimethylmethoxysilan / KOH (0,9:0,1:0,65)**

In einem mit Stickstoff inertisierten 500 ml-5-Hals-Rundkolben mit Flügelrührer, Tropftrichter, Thermometer und Wasserabscheider mit Rückflusskühler werden 70 g (0,5 mol) Methyltrimethoxysilan (käuflich erhältlich bei Wacker Chemie AG), 6 g (0,05 mol) Trimethylmethoxysilan (im Labor hergestellt durch Umsetzung von Trimethylchlorsilan mit Methanol) und 98,6 g Isopar E (isoparaffines Kohlenwasserstoffgemisch mit einem Siedebereich von 113 - 143°C, käuflich erhältlich bei ExxonMobil) vorgelegt. Der Wasserabscheider wird mit Isopar E randvoll befüllt. Unter Rühren mit 300 Upm wird eine Lösung aus 40,5 g einer 50%igen Kalilauge (0,36 mol KOH) und 3,2 g demineralisiertem Wasser binnen 6 Minuten zudosiert. Die Mischung erwärmt sich dabei auf 63°C. Man erhitzt auf Siedetemperatur (70°C). Das Destillat trennt sich als untere Phase im Wasserabscheider ab. Bis zu einer Siedetemperatur von 118°C sammeln sich 60,3 g farbloses, leicht trübes Destillat, das nach gaschromatografischer Analyse 84 Fl.-%- Methanol, 10,8 Fl.-% Wasser, 3,3 Fl.-% Isopar E und 0,8 Fl.-% Trimethylmethoxysilan enthält. Die verbleibende Suspension wird anschließend bei vollem Ölpupmenvakuum (5 hPa) bis 70°C unter Rühren zur Trockne eingedampft. Es werden 55,9 g feines, weißes, rieselfähiges Pulver erhalten, dessen Feststoffgehalt bei 99,9 % liegt (bestimmt mit der Festgehaltswaage HR73 Halogen Moisture Analyzer von Mettler Toledo bei 160°C). Eine damit hergestellte 50%ige wässrige Lösung weist selbst nach zweiwöchiger Lagerung bei Raumtemperatur unter Luftausschluss keine Niederschläge auf.

**Herstellungsbeispiel 10: Siliconat aus Methyltrimethoxysilan / 3,3,3-Trifluorpropyltrimethoxysilan / KOH (0,9:0,1:0,65)**

In einem mit Stickstoff inertisierten 500 ml-5-Hals-Rundkolben mit Flügelrührer, Tropftrichter, Thermometer und Wasserabscheider mit Rückflusskühler werden 50 g (0,36 mol) Methyltrimethoxysilan (käuflich erhältlich bei Wacker Chemie AG), 8,8 g (0,04 mol) 3,3,3-Trifluorpropyltrimethoxysilan (käuflich erhältlich bei Fluka) und 39,7 g Isopar E (isoparaffines Kohlenwasserstoffgemisch mit einem Siedebereich von 113 - 143°C, käuflich erhältlich bei ExxonMobil) vorgelegt. Der Wasserabscheider wird mit Isopar E randvoll befüllt. Unter Rühren mit 350 Upm wird eine Lösung aus 17,2 g Kaliumhydroxid (85%ig, käuflich erhältlich bei AppliChem) (0,26 mol KOH) und 15,3 g demineralisiertem Wasser binnen 12 Minuten zudosiert. Die Mischung erwärmt sich dabei auf 67°C. Man erhitzt auf Siedetemperatur (70°C). Das Destillat trennt sich als untere Phase im Wasserabscheider ab. Bis zu einer Siedetemperatur von 119°C sammeln sich 48,5 g farbloses, leicht trübes Destillat. Die verbleibende Suspension wird anschließend bei vollem Ölpumpenvakuum (5 hPa) bis 70°C unter Rühren zur Trockne eingedampft. Es werden 45,9 g feines, weißes, rieselfähiges Pulver erhalten, dessen Feststoffgehalt bei 99,7 % liegt (bestimmt mit der Festgehaltswaage HR73 Halogen Moisture Analyzer von Mettler Toledo bei 160°C). Eine damit hergestellte 50%ige wässrige Lösung weist selbst nach zweiwöchiger Lagerung bei Raumtemperatur unter Luftausschluss keine Niederschläge auf.

**Herstellungsbeispiel 11: Siliconat aus Methyltrimethoxysilan / KOH (1:0,65) - Simulation eines kontinuierlichen Verfahrens**

a) Hydrolyse in Methanol (-> wässrig, methanolische Siliconatlösung = Lösung A)

In einem mit Stickstoff inertisierten 500 ml-5-Hals-Rundkolben mit Flügelrührer, zwei Tropftrichtern, Thermometer und Rückflusskühler werden 25 g (0,36 mol) Methanol vorgelegt und auf Rückfluss erhitzt (ca. 65°C). Dann werden aus einem Tropftrichter 71,7 g einer 36,6%igen wässrigen Kaliumhydroxidlösung (0,47 mol KOH, 2,5 mol Wasser) und aus dem anderen Tropftrichter 100 g (0,72 mol) Methyltrimethoxysilan (käuflich erhältlich bei Wacker Chemie AG) parallel jeweils über einen Zeitraum von 30 Minuten in das siedende Methanol dosiert. Man lässt weitere 30 Minuten refluxieren und destilliert danach die vorgelegte Menge Methanol (25 g) ab. Als Rückstand verbleiben 165,8 g eine farblose klare Flüssigkeit (=Lösung A), deren Feststoffgehalt bei 45,4% liegt (bestimmt mit der Festgehaltswaage HR73 Halogen Moisture Analyzer von Mettler Toledo bei 160°C).

b) Hydrolyse in Hydrolysatlösung

In einem mit Stickstoff inertisierten 500 ml-5-Hals-Rundkolben mit Flügelrührer, zwei Tropftrichtern, Thermometer und Rückflusskühler werden 100 g der Lösung A vorgelegt und auf Rückfluss erhitzt (ca. 65°C). Dann werden aus einem Tropftrichter 71,7 g einer 36,6%igen wässrigen Kaliumhydroxidlösung (0,47 mol KOH, 2,5 mol Wasser) und aus dem anderen Tropftrichter 100 g (0,72 mol) Methyltrimethoxysilan (käuflich erhältlich bei Wacker Chemie AG) parallel jeweils über einen Zeitraum von 30 Minuten in die siedende Mischung dosiert. Dabei steigt der Siedepunkt auf 72°C an. Als Rückstand verbleiben 267,6 g einer farblosen klaren Flüssigkeit (=Lösung B), deren Feststoffgehalt bei 45,3% liegt (bestimmt mit der Festgehaltswaage HR73 Halogen Moisture Analyzer von Mettler Toledo bei 160°C).

c) Pulverisolierung

In einem mit Stickstoff inertisierten 500 ml-5-Hals-Rundkolben mit Flügelrührer, einem Tropftrichter, Thermometer und Wasserabscheider mit Rückflusskühler werden 100 g Isopar E (isoparaffines Kohlenwasserstoffgemisch mit einem Siedebereich von 113 - 143°C, käuflich erhältlich bei ExxonMobil) vorgelegt und auf 110°C aufgeheizt. Der Wasserabscheider wurde zuvor mit Isopar E randvoll befüllt. Unter Rühren mit 300 Upm werden 262,1 g der Lösung B so zudosiert, dass die Temperatur 100°C nicht unter- und 110°C nicht überschreitet. Dabei verdampfen die in Lösung B enthaltenen flüchtigen Bestandteile (hauptsächlich Methanol und Wasser) und kondensieren am Rückflusskühler. Das Siliconat scheidet sich im Isopar E fein verteilt ab und bildet eine weiße, gut rührbare Suspension. 145,2 g farbloses, leicht trübes Destillat trennen sich als untere Phase im Wasserabscheider ab. Die verbleibende Suspension wird anschließend bei vollem Ölpumpenvakuum (5 hPa) bis 100°C unter Rühren zur Trockne eingedampft. Es werden 115,2 g feines, weißes, rieselfähiges Pulver erhalten, dessen Feststoffgehalt bei 99,8 % liegt (bestimmt mit der Festgehaltswaage HR73 Halogen Moisture Analyzer von Mettler Toledo bei 160°C). Eine damit hergestellte 50%ige wässrige Lösung weist selbst nach zweiwöchiger Lagerung bei Raumtemperatur unter Luftausschluss keine Niederschläge auf.

Anwendungsbeispiel 1: Hydrophobierung eines Alabaster-**Stuckgipses mit einem Kalium-Methylsiliconatpulver mit einem Molverhältnis Alkali-Metall zu Silicium von 0,85 (Produkt aus Herstellungsbeispiel 1).**

Es wurde ein marktüblicher pH-neutraler Stuckgips in Pulverform (Alabastergips der Firma Hilliges Gipswerk GmbH und Co. KG, Osterode/Deutschland) mit variierenden Mengen an Kalium-Methylsiliconat-Pulver in trockener Form effektiv vermischt. Anschließend wurde diese Trockenmischung gemäß einem Wasser/Gips-Faktor von 0,6 unter Rühren portionsweise zum Anmachwasser gegeben und mit einem elektrisch betriebenen Flügelrührer bei moderater Drehzahl zu einem homogenen Slurry verrührt. Anschließend wurde der erhaltene Slurry in PVC-Ringe (Durchmesser: 80 mm, Höhe 20 mm) gegossen und der Gips bei 23 °C und 50 % relativer Luftfeuchte über 24 Stunden ausgehärtet. Nach der Entschalung der Gipsprüfkörper aus den Ringen wurde in einem Umlufttrockenschrank bei 40 °C bis zur Gewichtskonstanz der Prüfkörper getrocknet. Zur Bestimmung der Wasseraufnahme in Anlehnung an DIN EN 520 wurden die Prüfkörper nach Bestimmung des Trockengewichts für 120 min unter Wasser gelagert, wobei die Proben horizontal auf Metallgitter gelegt wurden und der Wasserüberstand über dem höchsten Punkt der Prüfkörper 5 mm betrug. Nach 120 min wurden die Prüfkörper aus dem Wasser genommen, auf einem mit Wasser gesättigten Schwamm abgetropft und aus dem Nassgewicht sowie dem Trockengewicht die prozentuale Wasseraufnahme gemäß der Formel

$$\text{Prozentuale Wasseraufnahme} = \{[\text{Masse(nass)} - \text{Masse(trocken)}]/\text{Masse(trocken)}\} \cdot 100 \text{ \%}$$

errechnet.

Wie in Tabelle 1 gezeigt, hydrophobiert das Kalium-Methylsiliconat-Pulver aus Herstellungsbeispiel 1 mit einem Molverhältnis Alkali-Metall zu Silicium von < 1 (gemäß allgemeiner Formel 1) Gips bereits sehr effizient. 10 % Wasseraufnahme werden bei maximal 0,6 % Dosierung unterschritten, 5 % Wasseraufnahme werden bei maximal 0,8 % Dosierung unterschritten. Der pH-Wert des Gipses (Slurry) wird durch die Dosierung des Kalium-Methylsiliconatpulvers erhöht, er betrug ohne Zusatz 7, bei Dosierung von 0,2 % Kalium-Methylsiliconatpulver 9, bei Dosierung von 0,6 % Kalium-Methylsiliconatpulver 10 (gemessen mit Indikatorstäbchen).

In den weiteren Anwendungsbeispielen 2-5 wurden marktübliche Gipsputze in Pulverform (Goldband Fertigputzgips Leicht und Maschinenputzgips MP 75 der Firma Knauf Gips KG, Iphofen/Deutschland) mit variierenden Mengen an Kalium-Methylsiliconat-Pulver in trockener Form effektiv vermischt. Anschließend wurde diese Trockenmischung gemäß der auf der Packung angegebenen Rezeptur unter Rühren portionsweise zum Anmachwasser gegeben und mit einem elektrisch betriebenen Flügelrührer bei moderater Drehzahl zu einem homogenen Slurry verrührt (Goldband Fertigputz Leicht: 300 g Gipspulver und 200 g Wasser, Maschinenputz MP 75: 300 g Gipspulver und 180 g Wasser, jeweils gemäß Packungsangabe). Anschließend wurde der erhaltene Slurry in PVC-Ringe (Durchmesser: 80 mm, Höhe 20 mm) gegossen. Die Trocknung, Entschalung sowie die Bestimmung der prozentualen Wasseraufnahme erfolgte wie zuvor für Anwendungsbeispiel 1 beschrieben.

**Anwendungsbeispiel 2: Hydrophobierung zweier Gipsputze mit einem Kalium-Methylsiliconatpulver mit einem Molverhältnis Alkali-Metall zu Silicium von 0,85 (Produkt aus Herstellungsbeispiel 1).**

Tabelle 1 zeigt, dass ein Kalium-Methylsiliconat-Pulver mit einem Molverhältnis Alkali-Metall zu Silicium von 1 (gemäß Formel 1) Gipsputze ebenfalls sehr effizient hydrophobiert. Je nach verwendetem Gipsputz werden 10 % Wasseraufnahme bei maximal 0,3 % Dosierung unterschritten, 5 % Wasseraufnahme werden bei maximal 0,4 % Dosierung unterschritten.

**Anwendungsbeispiel 3: Hydrophobierung zweier Gipsputze mit einem Kalium-Methylsiliconatpulver mit einem Molverhältnis Alkali-Metall zu Silicium von 0,64 (Produkt aus Herstellungsbeispiel 2).**

Durch die Reduktion des Alkalimetallanteils auf ein Molverhältnis Alkali-Metall zu Silicium von 0,64 kann die Effizienz des Hydrophobiermittels noch gesteigert werden. Es werden in diesem Beispiel 10 % Wasseraufnahme von einem Gipsputz bereits bei maximal 0,2 % Dosierung unterschritten, 5 % Wasseraufnahme werden von beiden Putzen bereits bei maximal 0,3 % Dosierung unterschritten. Der pH-Wert der Gipsputze (Slurry) wird durch die Dosierung des Kalium-Methylsiliconatpulvers nicht beeinflusst, er betrug ohne Zusatz 12,5, bei Dosierung von 1,0 % Kalium-Methylsiliconatpulver ebenfalls 12,5 (gemessen mit Indikatorstäbchen).

**Anwendungsbeispiel 4:**

Führt man die Wasseraufnahmeprüfung nicht wie in Anwendungsbeispiel 3 sofort nach der Trocknung der Probekörper, sondern erst nach drei Tagen durch und verlängert die Ruhezeit, so kann erneut eine Steigerung der Effizienz des Hydrophobiermittels beobachtet werden. Beide Gipsputze nehmen bei 0,2 % Dosierung nur noch nahezu 5 % Wasser auf, 5 % Wasseraufnahme werden bei maximal 0,3 % Dosierung für beide Putze deutlich unterschritten.

**Anwendungsbeispiel 5:**

Ein Vergleich mit dem Dry-Mix-Hydrophobieradditiv SILRES® PULVER G (Wacker Chemie AG) macht den Unterschied zu derzeit handelsüblichen Produkten deutlich. 10 % kapillare Wasseraufnahme werden erst durch Dosierung von 1,4 % SILRES® PULVER G erreicht, 5 % kapillare Wasseraufnahme werden durch 1,6 % SILRES® PULVER G unterschritten.

Tabelle 1 Wasseraufnahme von Gipsprüfkörpern in Anlehnung an DIN EN 520

| | Anwendungsbeispiel | | | | | | | |
|---|---|---|---|---|---|---|---|---|
| Dosierung (Gew.-% bzgl. Gipstrockensubstanz) | 1 Alabastergips | 2 Knauf MP 75 | 2 Knauf Goldband | 3 Knauf MP 75 | 3 Knauf Goldband | 4 Knauf MP 75 | 4 Knauf Goldband | 5* Knauf Goldband |
| 0 | 35,8 | 39,9 | 36,3 | 39,9 | 36,3 | 39,9 | 36,3 | 36,3 |
| 0,2 | | 10,2 | 31, 5 | 8,4 | 25,3 | 5,9 | 6,8 | 36,0 |
| 0,3 | | 4,0 | 21,8 | 3,4 | 4,3 | 2,7 | 1,1 | |
| 0,4 | | 3,4 | 2,3 | 2,4 | 1,4 | 2,4 | 1,2 | 29,0 |
| 0,5 | | 2,2 | 1,4 | 2,1 | 1,1 | 2,1 | 1,0 | |
| 0,6 | 8,0 | 2,0 | 1,1 | 2,1 | 1,0 | 2,3 | 1,1 | 24,0 |
| 0,8 | 4,6 | 1,8 | 0,9 | 2,5 | 0,8 | 2,4 | 0,9 | 13,1 |
| 1,0 | 2,1 | 1,6 | 0,8 | 1,7 | 0,9 | 2, 0 | 1,1 | 12,0 |
| 1,2 | | 1,5 | 0,7 | | | | | 13,2 |
| 1,3 | 0,6 | | | | | | | |
| 1,4 | | | | | | | | 10,7 |
| 1,5 | 0,7 | | | | | | | |
| 1,6 | | | | | | | | 3,2 |
| 1,8 | | | | | | | | 1,6 |
| *nicht erfindungsgemäß | | | | | | | | |

EP 2 596 001 B1

**Anwendungsbeispiel 6:**

Marktübliche rote Ziegelsteine eines spanischen Herstellers wurden durch Tauchen in wässrige Kaliummethyl-silikonatlösungen wasserabweisend imprägniert. Dabei wurde die Wirkung einer Lösung von erfindungsgemäßem Kaliummethylsiliconatpulver (Molverhältnis Kalium zu Silicium von 0,85; Produkt aus Herstellungsbeispiel 1) in Wasser mit einer wässrigen Verdünnung von SILRES® BS 16 (Kaliummethylsiliconat 54%ig in Wasser) verglichen. Die Ziegel wurden für 30 Sekunden vollständig in die Lösungen eingetaucht. Anschließend wurden die Ziegel für 7 Tage bei 23 °C und 50 % relativer Luftfeuchte gelagert und dann in einem Umlufttrockenschrank bei 40 °C bis zur Gewichtskonstanz getrocknet. Die Wasseraufnahme wurde durch Wasserlagerung über 24 Stunden in Anlehnung an DIN EN 15148 geprüft (Mittelwertbildung aus Doppelwertbestimmung). Ebenfalls wurde die Eindringtiefe der Imprägnierung durch Brechen der Ziegelsteine und Beträufeln mit Wasser bestimmt (Mittelwertbildung aller Seiten aus Doppelwertbestimmung).

Tabelle 2 Wasseraufnahme über 24 Stunden in Anlehnung an DIN EN 15148:

| Imprägniermittel | Verhältnis | Gemittelte Wasseraufnahme (24 h) (Gew.-%) | Gemittelte Eindringtiefe (mm) |
|---|---|---|---|
| SILRES® BS 16* | 1 Gew.-Teil BS 16 | 1,2 | 5 |
| | 70 Gew.-Teile Wasser | | |
| Kaliummethylsiliconatpulver (K:Si = 0.85) | 0,5 Teile Pulver | 1,1 | 5 |
| | 70 Gew.-Teile Wasser | | |
| Ohne* Imprägnierung | --- | 13,9 | 0 |
| * nicht erfindungsgemäß | | | |

**Anwendungsbeispiel 7**

Ein Teil SILRES® BS 16 von Wacker Chemie AG wird mit 70 Teilen Wasser (Gewichtsteile) gemischt und ergibt eine klare Lösung. In diese Lösung werden Produkte aus gebranntem Ton, wie beispielsweise Dachziegel, Ziegel, Klinkersteine, Blumentöpfe oder Pflastersteine getaucht oder mit der Lösung besprüht. Die gleiche klare Lösung mit gleichem molaren Wirkstoffgehalt an siliciumorganischer Verbindung wird durch das Auflösen von 0,5 Teilen Kaliummethylsiliconatpulver aus Herstellungsbeispiel 1 (Molverhältnis Kalium zu Silicium von 0,85) in 70 Teilen Wasser (Gewichtsteile) erhalten. Auch nach 10 Tagen war die Lösung klar und anwendungsbereit.

**Vergleichsbeispiel 1:**

Ein gemäß US2438055, Beispiel 1 hergestelltes Natriummethylsiliconatpulver wurde verglichen mit einem nach dem erfindungsgemäßen Verfahren hergestellten Natriummethylsiliconatpulver gleicher Stöchiometrie.

Tabelle 3 Wasseraufnahme von Gipsprüfkörpern in Anlehnung an DIN EN 520

| | | Dosierung (Gew.-% bzgl. Gipstrockensubstanz) | | | |
|---|---|---|---|---|---|
| Verfahren gemäß | Gips | 0,10 | 0,30 | | |
| US2438055* | Knauf MP 75 | 21,7 | | | |
| | Knauf Goldband | | 6,3 | | |
| erfindungsgemäß | Knauf MP 75 | 12,6 | | | |
| | Knauf Goldband | | 1,8 | | |
| * nicht erfindungsgemäß | | | | | |

Vergleichsbeispiel 2:

Ein gemäß US2803561, Beispiel 1 hergestelltes Natriummethylsiliconatpulver wurde verglichen mit einem nach dem erfindungsgemäßen Verfahren hergestellten Natriummethylsiliconatpulver gleicher Stöchiometrie.

Tabelle 4 Wasseraufnahme von Gipsprüfkörpern in Anlehnung an DIN EN 520

| | | Dosierung (Gew.-% bzgl. Gipstrockensubstanz) | | | |
|---|---|---|---|---|---|
| Verfahren gemäß | Gips | 0,15 | 0,30 | | |
| US 2803561 * | Knauf MP 75 | 8,0 | | | |
| | Knauf Goldband | | 7,6 | | |
| erfindungsgemäß | Knauf MP 75 | 3,2 | | | |
| | Knauf Goldband | | 1,8 | | |
| * nicht erfindungsgemäß | | | | | |

**Vergleichsbeispiel 3:**

Ein gemäß DE1176137 Beispiel 1 hergestelltes Natriummethylsiliconatpulver wurde verglichen mit einem nach dem erfindungsgemäßen Verfahren hergestellten Natriummethylsiliconatpulver gleicher Stöchiometrie.

Tabelle 5 Wasseraufnahme von Gipsprüfkörpern in Anlehnung an DIN EN 520

| | | Dosierung (Gew.-% bzgl. Gipstrockensubstanz) | | | |
|---|---|---|---|---|---|
| Verfahren gemäß | Gips | 0,15 | 0,40 | | |
| DE1176137 * | Knauf MP 75 | 25,3 | | | |
| | Knauf Goldband | | 2,3 | | |
| erfindungsgemäß | Knauf MP 75 | 3,2 | | | |
| | Knauf Goldband | | 1,4 | | |
| * nicht erfindungsgemäß | | | | | |

**Anwendungsbeispiel 8: Hydrophobierung eines Stuckgipses mit einer Mischung aus einem Methylhydrogenpolysiloxan (STLRES® BS 94 von Wacker Chemie AG) und einem Kalium-Methylsiliconatpulver mit einem Molverhältnis Alkali-Metall zu Silicium von 0,64 (Produkt aus Herstellungsbeispiel 2).**

Analog zu Anwendungsbeispiel 1 wurde ein pH-neutraler Bandstraßen-Stuckgips in Pulverform (Knauf Gips KG, Iphofen/Deutschland) zunächst mit einer definierten Menge Kalium-Methylsiliconat-Pulver aus Herstellungsbeispiel 2 in trockener Form effektiv vermischt. Separat wurde das Anmachwasser mit der definierten Menge SILRES® BS 94 versetzt und mit einem Homogenisator (Ultraturrax) bei ca. 10.000 UpM für 20 Sekunden homogenisiert. Anschließend wurde die Trockenmischung gemäß einem Wasser/Gips-Faktor von 0,60 unter Rühren portionsweise zum Anmachwasser gegeben und mit einem elektrisch betriebenen Flügelrührer bei moderater Drehzahl zu einem homogenen Gipsbrei verrührt. Die Herstellung und Behandlung der Prüfkörper erfolgte analog Anwendungsbeispiel 1, ebenso die Ermittlung der Wasseraufnahme. Wie in Tabelle 8 gezeigt, bewirkt die Kombination aus SILRES® BS 94 und Kalium-Methylsiliconat-Pulver aus Herstellungsbeispiel 2 eine deutlich effizientere Hydrophobierung als der Einsatz der jeweiligen Einzelkomponente. Ersetzt man beispielweise ein Viertel des Methylhydrogenpolysiloxans in 8/4 durch Siliconat-Pulver (8/7), so verringert sich die Wasseraufnahme um über 50%. Bei den Mischungen (8/2 und 8/3) mit jeweils 0,2 Gew.-% Anteil der jeweiligen Einzelkomponente (SILRES® BS94 oder Kaliummethylsiliconatpulver aus Herstellungsbeispiel 2) führt der Zusatz von 0,1 Gew.-% der jeweiligen anderen Einzelkomponente zu Wasseraufnahmewerten unter 5 % (8/5 und 8/6).

Tabelle 6: Wasseraufnahme von Gipsprüfkörpern in Anlehnung an DIN EN 520

| Bsp. | Dosierung (Gew.-% bzgl. Gipstrockensubstanz) | | Wasseraufnahme in Gew.-% (2 Std.) |
|------|------------------|--------------------------------------------------|-----------------------------------|
|      | SILRES® BS 94 | K-Methylsiliconatpulver aus Herstellungsbeisp. 2 | |
| 8/1  | 0   | 0   | 37,4 |
| 8/2  | 0   | 0,2 | 16,8 |
| 8/3  | 0,2 | 0   | 6,4 |
| 8/4  | 0,4 | 0   | 6,3 |
| 8/5  | 0,1 | 0,2 | 3,7 |
| 8/6  | 0,2 | 0,1 | 2,9 |
| 8/7  | 0,3 | 0,1 | 2,7 |

**Anwendungsbeispiel 9: Hydrophobierung von Bodenproben**

Dieses Beispiel zeigt, dass die erfindungsgemäßen Siliconate in Kombination mit Natriumsilikaten hocheffiziente Bodenhydrophobierungsmittel ergeben, die in ihrer Wirksamkeit der kommerziell erhältlichen wässrigen Lösung zumindest gleich stehen. Die Wirksamkeit ist auch dann vorhanden, wenn sich die Mischung nicht komplett in Wasser löst.

Als Testsubstrat diente Erde mit einem Schüttgewicht von 1,5983 g/cm$^3$ und einem Feuchtegehalt von 3,65 % (bestimmt nach 24h Lagerung bei 110°C). Jeweils 500 g Erde wurden in einem Schaufelmischer mit dem jeweiligen Additiv und soviel Wasser versetzt, dass ein Feuchtegehalt von 4 Gew.-% resultierte. Man rührte weitere 5 Minuten, füllte die Mischung in eine hydraulische Presse, und komprimierte sie binnen 5 Sekunden bei 300 bar zu einem Quader mit den Maßen 12,5 x 6 x 3,5 cm. Die so hergestellten Prüfkörper wurden vor der Prüfung 7 Tage bei Raumtemperatur gelagert.

Prüfung:

Die Quader wurden auf ihrer kleinsten Fläche in Petrischalen gestellt. Zur Untersuchung der Beständigkeit gegen kapillare Wasseraufnahme wurden die Petrischalen 1 cm hoch mit Wasser befüllt. Der Wasserstand wurde während der Prüfdauer konstant gehalten.

Folgende Additive kamen zum Einsatz:

WACKER SILRES® 501 dry soil = kommerziell erhältliche wässrige Lösung aus 45 Gew.-% WACKER SILRES® BS 16 (= 54%ige wässrige Lösung von Kaliummethylsiliconat) und 23 Gew.-% Woellner Natriumsilikat 38/40 (= 36%ige wässrige Lösung von Natriumsilikat, erhältlich bei Woellner GmbH&Co.KG) sowie Mischungen von 75 Gew.-% Kaliummethylsiliconat-Pulver aus Herstellungsbeispiel 2 (K:Si=0,64) mit jeweils 25 Gew.-% festen Natriumsilikaten der Woellner GmbH&Co.KG:

Simet AP (= Mischung AP), Simet AG (= Mischung AG) und Sikalon A (=Mischung A)

Tabelle 7

| Bsp. | Dosierung (bzgl. 500 g Erde) | | Ergebnis |
|------|------------------------------|----------|----------|
|      | Additiv | Wasser | |
| 9/1 | 0 | 1,75 g | < 10 sec stabil |
| 9/2 | 1,55 (SILRES® 501)*) (=0,52 g Feststoff) | 0,71 g | > 4 Wochen stabil |
| 9/3 | 0,52 g Mischung AP*) | 1,75 g | > 4 Wochen stabil |
| 9/4 | 0,52 g Mischung A**) | 1,75 g | > 4 Wochen stabil |

(fortgesetzt)

| | Dosierung (bzgl. 500 g Erde) | | |
|---|---|---|---|
| Bsp. | Additiv | Wasser | Ergebnis |
| 9/5 | 0,52 g Mischung AG**) | 1,75 g | > 4 Wochen stabil |
| *) unbegrenzt mit Wasser mischbar<br>**) nicht vollständig wasserlöslich | | | |

**Patentansprüche**

1. Pulver (P) aus Salzen von Organosilanolen, von deren Hydrolyse/Kondensationsprodukten, oder von Organosilanolen zusammen mit deren Hydrolyse/Kondensationsprodukten mit Kationen, die ausgewählt werden aus Alkali-, Ammonium- und Organoammoniumionen, bei denen das Molverhältnis von Kation zu Silicium 0,1 bis 0,89 beträgt.

2. Verfahren zur Herstellung von Pulvern (P1), bei dem in einem ersten Schritt Organosilane der allgemeinen Formel

$$(R^1)_a Si(Y)_b(-Si(R^2)_{3-c}(Y)_c)_d \qquad (1)$$

oder deren Hydrolyse/Kondensationsprodukte, oder die Organosilane der allgemeinen Formel 1 zusammen mit deren Hydrolyse/Kondensationsprodukten,
wobei

$R^1$, $R^2$ einen einwertigen Si-C gebundenen unsubstituierten oder durch Halogenatome, Aminogruppen oder mit $C_{1-6}$-Alkyl oder $C_{1-6}$-Alkoxygruppen substituierten Silylgruppen substituierten Kohlenwasserstoffrest mit 1 bis 30 Kohlenstoffatomen, in dem eine oder mehrere, einander nicht benachbarte $-CH_2$-Einheiten durch Gruppen -O-, -S-, oder $-NR^3$- ersetzt sein können und in denen eine oder mehrere, einander nicht benachbarte =CH-Einheiten durch Gruppen -N= ersetzt sein können,
$R^3$ Wasserstoff, einen einwertigen unsubstituierten oder durch Halogenatome oder $NH_2$-Gruppen substituierten Kohlenwasserstoffrest mit 1 bis 8 Kohlenstoffatomen,
Y Wasserstoff, F, Cl, Br oder O$R^4$
$R^4$ einen einwertigen unsubstituierten oder durch Halogenatome oder Silylgruppen substituierten Kohlenwasserstoffrest mit 1 bis 10 Kohlenstoffatomen, in dem eine oder mehrere, einander nicht benachbarte $CH_2$-Einheiten durch Gruppen -O-, -S-, oder $-NR^3$- ersetzt sein können und in denen eine oder mehrere, einander nicht benachbarte =CH-Einheiten durch Gruppen -N= ersetzt sein können,
a die Werte 1, 2 oder 3 und
b, c, d die Werte 0, 1, 2 oder 3 bedeuten,

mit der Massgabe, dass b+c $\geq$ 1 und a+b+d = 4,
in Gegenwart von Wasser und basischem Salz von Kationen, die ausgewählt werden aus Alkali-, Ammonium- und Organoammoniumionen, hydrolysiert werden,
wobei die Menge an basischem Salz so bemessen ist, dass auf ein Mol Silicium mindestens 0,1 Mol und höchstens 3 Mol Kationen kommen, und falls die Organosilane der allgemeinen Formel 1 Reste ausgewählt aus F, Cl, Br aufweisen, pro Mol F, Cl und Br ein weiteres Mol an basischem Salz vorhanden ist,
und mindestens 50% der Reste $R^1$ und $R^2$ höchstens 3 C-Atome enthalten,
in einem zweiten Schritt die freigesetzte Verbindung HY, während oder nach der Hydrolysereaktion aus dem Reaktionsgemisch als Dampf bzw. Gas entfernt wird, wobei eine unter den Reaktionsbedingungen inerte Flüssigkeit F anwesend ist, deren Siedepunkt oberhalb dem der freigesetzten Verbindung HY liegt und in der das als Feststoff anfallende Siliconatsalz bei 100°C/ 1 bar zu höchstens 1 Gew.-% löslich ist,
in einem dritten Schritt durch Ausdestillieren von Wasser eine Suspension des Siliconatsalzes in der Flüssigkeit F gebildet wird und
in einem vierten Schritt das Siliconatsalz als Pulver (P1) durch Filtration, Zentrifugation, Sedimentation oder Abdampfen von der inerten **Flüssigkeit F** isoliert wird.

3. Verfahren nach Anspruch 2, bei dem der erste Schritt in Abwesenheit der inerten **Flüssigkeit F** durchgeführt wird, im gleichzeitig durchgeführten zweiten und dritten Schritt die dabei gebildete Siliconatsalz-Lösung mit der inerten **Flüssigkeit F** unter Bedingungen in Kontakt gebracht wird, bei denen die flüchtigen Bestandteile der Lösung verdampfen und das Siliconatsalz als Feststoff ausfällt.

4. Verfahren nach Anspruch 2 oder 3, bei dem die basischen Salze ausgewählt werden aus Natriumhydroxid und Kaliumhydroxid.

5. Verfahren nach Anspruch 2 bis 4, bei dem als inerte **Flüssigkeit F** Kohlenwasserstoffe eingesetzt werden.

6. Pulver (P1), herstellbar nach dem Verfahren nach Anspruch 2 bis 5.

7. Pulver (P) gemäss Anspruch 1 und Pulver (P1) gemäss Anspruch 6, welche bei 20°C eine Wasserlöslichkeit von mindestens 20 Gew,-% aufweisen.

8. Pulver (P) gemäss Anspruch 1 und Pulver (P1) gemäss Anspruch 6 oder 7, welche mittlere Korngrößen von höchstens 500 $\mu$m aufweisen.

9. Verfahren nach Anspruch 2 bis 5 und Pulver (P1) gemäss Anspruch 6 bis 8, wobei **R$^1$, R$^2$** einen Alkylrest mit 1 bis 6 Kohlenstoffatomen bedeuten.

10. Verfahren nach Anspruch 2 bis 5 und 9 und Pulver (P1) gemäss Anspruch 6 bis 9, wobei **Y OR$^4$** bedeutet und **R$^4$** einen Alkylrest mit 1 bis 4 Kohlenstoffatomen bedeutet.

11. Verwendung der Pulver (P) gemäss Anspruch 1 und Pulver (P1) gemäss Anspruch 6 bis 10 als Hydrophobiermittel.

12. Verwendung nach Anspruch 11 als Hydrophobiermittel für mineralische Baustoffe.

13. Verwendung nach Anspruch 12, wobei die mineralischen Baustoffe auf Gips basierend sind.

14. Pulverförmige Baustoffe auf Gips basierend, enthaltend 0,01 bis 10 % Pulver (P) gemäss Anspruch 1 oder Pulver (P1) gemäss Anspruch 6 bis 10.


**Claims**

1. Powders (P) comprising salts of organosilanols, of their hydrolysis/condensation products, or of organosilanols together with their hydrolysis/condensation products with cations selected from alkali metal ions, ammonium ions, and organoammonium ions, wherein the molar ratio of cation to silicon is 0.1 to 0.89.

2. Process for producing powders (P1), by subjecting in a first step organosilanes of the general formula 1

$$(R^1)_a Si(Y)_b(-Si(R^2)_{3-c}(Y)_c)_d \qquad (1)$$

or their hydrolysis/condensation products, or the organosilanes of the general formula 1 together with their hydrolysis/condensation products,
where
**R$^1$** and **R$^2$** are each a monovalent, Si-C-bonded hydrocarbon radical which is unsubstituted or is substituted by halogen atoms, amino groups or $C_{1-6}$ alkyl- or $C_{1-6}$ alkoxy-substituted silyl groups and has 1 to 30 carbon atoms, in which one or more nonadjacent -$CH_2$- units may be replaced by groups - O-, -S-, or -NR$^3$-, and in which one or more nonadjacent =CH- units may be replaced by groups -N=,
**R$^3$** is hydrogen or a monovalent hydrocarbon radical having 1 to 8 carbon atoms which is unsubstituted or substituted by halogen atoms or $NH_2$ groups,
**Y** is hydrogen, F, Cl, Br, or O**R$^4$,**
**R$^4$** is a monovalent hydrocarbon radical which is unsubstituted or substituted by halogen atoms or silyl groups and has 1 to 10 carbon atoms, in which one or more nonadjacent $CH_2$ units may be replaced by groups -O-, -S-, or -NR$^3$-, and in which one or more nonadjacent =CH- units may be replaced by groups -N=,
**a** denotes the values 1, 2 or 3, and
**b, c,** and **d** denote the values 0, 1, 2 or 3,
with the proviso that b+c $\geq$ 1 and a+b+d = 4,

to hydrolysis in the presence of water and basic salt of cations selected from alkali metal ions, ammonium ions, and organoammonium ions,

the amount of basic salt being calculated such that per mole of silicon there is at least 0.1 mol and not more than 3 mol of cations, and, if the organosilanes of the general formula 1 contain radicals selected from F, Cl, and Br, a further mole of basic salt is present per mole of F, Cl, and Br,

and at least 50% of the radicals $R^1$ and $R^2$ contain not more than 3 C atoms,

in a second step, removing the liberated compound H**Y**, during or after the hydrolysis reaction, from the reaction mixture, in the form of vapor and/or gas, in the presence of a **liquid F** which is inert under the reaction conditions, has a boiling point above that of the liberated compound H**Y,** and has a solvency of not more than 1% by weight for the siliconate salt produced in solid form, at 100°C/1 bar,

in a third step, removing water by distillation to form a suspension of the siliconate salt in the **liquid F,** and

in a fourth step, isolating the siliconate salt in the form of powder (P1) by filtration, centrifugation, sedimentation or evaporation of the inert **liquid F.**

3. Process according to Claim 2, in which the first step is carried out in the absence of the inert **liquid F,** and in the simultaneously implemented second and third steps, the siliconate salt solution formed is contacted with the inert **liquid F** under conditions in which the volatile constituents of the solution evaporate and the siliconate salt is precipitated in the form of a solid.

4. Process according to Claim 2 or 3, in which the basic salts are selected from sodium hydroxide and potassium hydroxide.

5. Process according to Claim 2 to 4, in which hydrocarbons are used as inert **liquid F.**

6. Powders (P1) producible by process according to Claim 2 to 5.

7. Powders (P) according to Claim 1 and powders (P1) according to Claim 6, which have a water solubility of at least 20% by weight at 20°C.

8. Powders (P) according to Claim 1 and powders (P1) according to Claim 6 or 7, which have average particle sizes of not more than 500 μm.

9. Process according to Claim 2 to 5 and powders (P1) according to Claim 6 to 8, where $R^1$ and $R^2$ are each an alkyl radical having 1 to 6 carbon atoms.

10. Process according to Claim 2 to 5 and 9 and powders (P1) according to Claim 6 to 9, where **Y** is O$R^4$ and $R^4$ is an alkyl radical having 1 to 4 carbon atoms.

11. Use of the powders (P) according to Claim 1 and powders (P1) according to Claim 6 to 10 as hydrophobizing agents.

12. Use according to Claim 11 as hydrophobizing agents for mineral building materials.

13. Use according to Claim 12, where the mineral building materials are based on gypsum.

14. Building materials in powder form, based on gypsum, comprising 0.01% to 10% of powders (P) according to Claim 1 or powders (P1) according to Claim 6 to 10.

**Revendications**

1. Poudre (P) de sels d'organosilanols, de leurs produits d'hydrolyse/de condensation ou d'organosilanols conjointement avec leurs produits d'hydrolyse/de condensation avec des cations, qui sont choisis parmi les ions alcalins, ammonium et organo-ammonium, dans laquelle le rapport en moles entre le cation et le silicium est de 0,1 à 0,89.

2. Procédé de fabrication de poudres (P1), selon lequel, lors d'une première étape, des organosilanes de formule générale 1

$$(R^1)_a Si(Y)_b(-Si(R^2)_{3-c}(Y)_c)_d \qquad (1)$$

ou leurs produits d'hydrolyse/de condensation, ou des organosilanes de formule générale 1 conjointement avec leurs produits d'hydrolyse/de condensation, $R^1$, $R^2$ représentant un radical hydrocarboné monovalent relié à Si-C, contenant 1 à 30 atomes de carbone, non substitué ou substitué avec des groupes silyle substitués par des atomes d'halogène, des groupes amino ou des groupes alkyle en $C_{1-6}$ ou alcoxy en $C_{1-6}$, dans lequel une ou plusieurs unités $-CH_2-$ non voisines les unes des autres peuvent être remplacées par des groupes -O-, -S- ou $-NR^3-$, et dans lequel une ou plusieurs unités =CH- non voisines les unes des autres peuvent être remplacées par des groupes -N=, $R^3$ représente l'hydrogène, un radical hydrocarboné monovalent de 1 à 8 atomes de carbone, non substitué ou substitué par des atomes d'halogène ou des groupes $NH_2$, Y représente hydrogène, F, Cl, Br ou $OR^4$, $R^4$ représente un radical hydrocarboné monovalent non substitué ou substitué par des atomes d'halogène ou des groupes silyle, contenant 1 à 10 atomes de carbone, dans lequel une ou plusieurs unités $CH_2$ non voisines les unes des autres peuvent être remplacées par des groupes -O-, -S- ou $-NR^3-$, et dans lequel une ou plusieurs unités =CH- non voisines les unes des autres peuvent être remplacées par des groupes -N=, a signifie les valeurs 1, 2 ou 3, et b, c, d signifient les valeurs 0, 1, 2 ou 3, à condition que b+c $\geq$ 1 et a+b+d = 4, sont hydrolysés en présence d'eau et d'un sel basique de cations, qui sont choisis parmi les ions alcalins, ammonium et organo-ammonium, la quantité de sel basique étant déterminée de manière à introduire, pour une mole de silicium, au moins 0,1 mole et au plus 3 moles de cations et à ce que, si les organosilanes de formule générale 1 comprennent des radicaux choisis parmi F, Cl, Br, une mole supplémentaire de sel basique soit présente par mole de F, Cl et Br, et au moins 50 % des radicaux $R^1$ et $R^2$ contenant au plus 3 atomes C, lors d'une deuxième étape, le composé HY libéré pendant ou après la réaction d'hydrolyse est éliminé du mélange réactionnel sous la forme de vapeur ou de gaz, un liquide F inerte dans les conditions de réaction étant présent, dont le point d'ébullition est supérieur à celui du composé HY libéré, et dans lequel le sel de siliconate formé en tant que solide est soluble à 100 °C/1 bar à hauteur d'au plus 1 % en poids, lors d'une troisième étape, une suspension du sel de siliconate dans le liquide F est formée par élimination par distillation d'eau, et lors d'une quatrième étape, le sel de siliconate est isolé sous la forme d'une poudre (P1) par filtration, centrifugation, sédimentation ou évaporation du liquide inerte F.

3. Procédé selon la revendication 2, selon lequel la première étape est réalisée en l'absence du liquide inerte F et, lors de la deuxième et de la troisième étape réalisées simultanément, la solution de sel de siliconate formée est mise en contact avec le liquide inerte F dans des conditions dans lesquelles les constituants volatils de la solution s'évaporent et le sel de siliconate précipite sous forme solide.

4. Procédé selon la revendication 2 ou 3, selon lequel les sels basiques sont choisis parmi l'hydroxyde de sodium et l'hydroxyde de potassium.

5. Procédé selon les revendications 2 à 4, selon lequel des hydrocarbures sont utilisés en tant que liquide inerte F.

6. Poudre (P1), pouvant être fabriquée par le procédé selon les revendications 2 à 5.

7. Poudre (P) selon la revendication 1 et poudre (P1) selon la revendication 6, qui présentent à 20 °C une solubilité dans l'eau d'au moins 20 % en poids.

8. Poudre (P) selon la revendication 1 et poudre (P1) selon la revendication 6 ou 7, qui présentent des tailles de particule moyennes d'au plus 500 $\mu$m.

9. Procédé selon les revendications 2 à 5 et poudre (P1) selon les revendications 6 à 8, dans lesquels $R^1$ et $R^2$ signifient un radical alkyle de 1 à 6 atomes de carbone.

10. Procédé selon les revendications 2 à 5 et 9 et poudre (P1) selon les revendications 6 à 9, dans lesquels Y signifie $OR^4$ et $R^4$ signifie un radical alkyle de 1 à 4 atomes de carbone.

11. Utilisation de la poudre (P) selon la revendication 1 et de la poudre (P1) selon les revendications 6 à 10 en tant qu'agent hydrophobant.

**12.** Utilisation selon la revendication 11 en tant qu'agent hydrophobant pour matériaux de construction minéraux.

**13.** Utilisation selon la revendication 12, dans laquelle les matériaux de construction minéraux sont à base de gypse.

**14.** Matériaux de construction en poudre à base de gypse, contenant 0,01 à 10 % de poudre (P) selon la revendication 1 ou de poudre (P1) selon les revendications 6 à 10.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4336600
- US 4252569 A
- WO 2010052201 A
- US 2567110 A
- US 2438055 A
- US 2803561 A
- DE 1176137
- EP 992565 A